# EUROPÄISCHE PATENTSCHRIFT

(11) **EP 3 947 528 B1**
(45) Veröffentlichungstag und Bekanntmachung des Hinweises auf die Patenterteilung: **07.06.2023**
(21) Anmeldenummer: 20717590.2
(22) Anmeldetag: 31.03.2020
(51) Int. Cl.: C08K 5/12, C08G 75/16, C08G 18/00, C08G 18/24, C08G 18/69, C08G 18/76, C08K 3/013, C08K 3/04, C08K 3/36, C08K 5/00, C08L 81/04, E06B 3/66, C08L 23/20, C08K 3/26, C08K 3/34, E06B 3/673, E06B 3/663, C08K 5/5435

(54) **SYSTEM ZUR HERSTELLUNG EINES DICHTMASSENVERBUNDS FÜR ISOLIERGLAS**
SYSTEM FOR PRODUCING A SEALING COMPOUND FOR INSULATING GLASS
SYSTÈME POUR LA FABRICATION D'UN COMPOSITE DE MASSES D'ÉTANCHÉITÉ POUR UN VERRE ISOLANT

(30) Priorität: 03.04.2019 DE 102019204773
(43) Veröffentlichungstag der Anmeldung: 09.02.2022
(73) Patentinhaber: IGK Isolierglasklebstoffe GmbH, 63594 Hasselroth (DE)
(72) Erfinder: KARRER, Randolf, 63500 Seligenstadt (DE); POLIKARPOV, Nikita, 63454 Hanau (DE); VOLLRATH-RÖDIGER, Michael, 60388 Frankfurt (DE)
(74) Vertreter: Zellentin & Partner mbB Patentanwälte
(86) Internationale Anmeldenummer: PCT/EP2020/059132
(87) Internationale Veröffentlichungsnummer: WO 2020/201287

(56) Entgegenhaltungen:
- EP-A1- 0 889 108
- EP-A1- 2 420 536
- WO-A1-2011/056379
- WO-A2-2004/081329

## Beschreibung

Die vorliegende Erfindung betrifft ein System zur Herstellung eines Dichtmassenverbunds aus einem Primärdichtstoff und einem härtbaren Sekundärdichtstoff, die Verwendung des Systems zur Herstellung von Isolierglas oder Solarmodulen, einen Randverbund zur Herstellung von Zwei- oder Mehrscheiben-Isolierglas oder Solarmodulen umfassend den Dichtmassenverbund und eine Isolierglaseinheit umfassend mindestens zwei Glasscheiben und den Randverbund.

Isolierglas besteht aus mindestens zwei durch einen Abstandhalter bzw. Abstandhalterrahmen voneinander getrennten Glasscheiben, wobei die Anordnung üblicherweise durch eine Kombination von zwei verschiedenen Dichtmassen (einem sog. Primärdichtstoff und einem sog. Sekundärdichtstoff) versiegelt ist. Vorzugsweise können die Isolierglaseinheiten zur Verbesserung des Wärme- und Schallschutzes mit diversen Gasen (z. B. Edelgase wie Argon, Krypton oder Xenon, oder Schwergase wie Schwefelhexafluorid) gefüllt sein.

Der Primärdichtstoff dient zur Abdichtung der Einheit gegen eindringende Luftfeuchtigkeit und gegen austretende Füllgase und basiert meist auf Isobutylen-Polymeren, die eine nur geringe Wasserdampfpermeabilität aufweisen. Der Primärdichtstoff ist zwischen der zum Glas ausgerichteten Fläche des Abstandhalters und dem Glas angeordnet.

Der Sekundärdichtstoff dient zur elastischen Verklebung, füllt die zwischen den Glasscheiben und dem Abstandhalter gebildete Fuge aus und verleiht der Einheit mechanische Stabilität. Bei dem Sekundärdichtstoff handelt es sich typischerweise um Dichtmassen auf Polyurethan-, Polysulfid- oder Silikonbasis. Diese Massen können sowohl als einkomponentige Massen eingesetzt werden, die mit Luftfeuchtigkeit oder Luftsauerstoff aushärten. Bevorzugt werden zweikomponentige raumtemperaturhärtende Massen eingesetzt, bei der ein Teil die Polymerkomponente und der andere Teil eine Vernetzer- oder Härterkomponente enthält. Zur verbesserten Glashaftung kann der Sekundärdichtstoff zusätzlich Silane enthalten.

Die Kombination aus Abstandhalter/-rahmen, Primärdichtstoff und Sekundärdichtstoff wird üblicherweise als sog. Randverbund bezeichnet.

Der Abstandhalter ist im Randbereich der Glasscheiben platziert und dient dazu die beiden Glasscheiben bei der Montage der Einheit auf einem definierten Abstand zu halten. Isolierglaseinheiten mit Abstandhalterrahmen sind bekannt. Diese Abstandhalter können mit Trockenmittel gefüllte Hohlprofilstäbe aus Aluminium oder Edelstahl sein, welche dem Primärdichtstoff, in der Regel einem thermoplastischen Dichtstoff (wie Polyisobutylen-Hotmelt), an den Glasscheiben befestigt werden. Solche metallischen Abstandhalterrahmen haben jedoch den Nachteil, dass sie eine Kältebrücke zwischen den Glasscheiben der Isolierglaseinheit bilden.

Um dies zu beseitigen, werden in letzter Zeit Abstandhalterrahmen aus thermoplastischen Profilen verwendet, die vorgefertigt sein können oder insbesondere unmittelbar auf eine der Glasscheiben extrudiert werden können. Derartige thermoplastische Abstandhalterrahmen bestehen in der Regel im Wesentlichen aus einem olefinischen Polymer, wie Polyisobutylen, das zusätzlich noch ein Trockenmittel enthalten kann. Vorzugsweise werden Materialien eingesetzt, die sich als Hotmelt applizieren lassen und die nach dem Abkühlen zu einer festen Masse erstarren, die am Glas haftet. Diese Abstandhalterrahmen, auch bekannt als sog. thermoplastic spacer ("TPS" oder "TPA"), vereinen die Funktion des Abstandhalters und des Primärdichtstoffes und gewährleisten somit auch die Gasdichtigkeit. Solche Systeme sind zum Beispiel DE 695 03 462 T2 und in EP 916 801 A2 beschrieben. Ein Verfahren und eine Vorrichtung zum Auftragen von extrudierten thermoplastischen Abstandhalterrahmen sind in DE 196 32 063 C1 beschrieben. Ein entsprechendes Produkt ist zum Beispiel unter der Bezeichnung "Naftotherm-BU TPS" von der Firma Chemetall GmbH erhältlich.

EP 2 420 536 A1 und WO 2011/056379 A1 beschreiben Systeme zur Herstellung eines Dichtmassenverbunds enthaltend einen Primärdichtstoff, sowie einen Sekundärdichtstoff auf Silikon-Basis.WO 2015/197491 A1 beschreibt ein Verfahren zur Herstellung eines Dichtmassenverbunds unter Einsatz eines Primärdichtstoffs und Sekundärdichtstoffs, die beide ebenfalls auf einem Silikondichtmittel basieren.WO 2004/081329 A2 beschreibt ein Verfahren zur Abdichtung von Glas unter Verwendung einer Dichtmasse auf Basis von Polyisobutylen. Alternativ kann dabei ein weiteres Dichtmittel eingesetzt werden, welches beispielsweise ein Polyurethan enthält.

Zur weiteren Aushärtung eines TPS wurde in der DE 102 04 174 A1 vorgeschlagen, dass das Polyisobutylen-Material vernetzende Gruppen enthalten kann, wie zum Beispiel funktionelle Silangruppen, die hydrolysierbare Funktionen, wie Alkoxygruppen enthalten.

Bei diesen Systemen ist die umlaufend nach außen gerichtete Kante des Abstandhalters gegen die Außenkanten der Glasscheiben um einen Abstand, in der Regel einige Millimeter, zurückversetzt, wobei der verbleibende Freiraum mit dem Sekundärdichtstoff gefüllt ist, welcher die Isolierglaseinheiten elastisch verklebt und dichtet.

Die Haftung zum Glas erfolgt dabei im Wesentlichen adhäsiv aufgrund physikalischer Wechselwirkungen des Polyisobutylen-basierten Materials und der Glasoberfläche.

Zwischen dem thermoplastischen Abstandhalter und dem Sekundärdichtstoff besteht oft eine unzureichende Haftung. Das kann zur Folge haben, dass sich der thermoplastische Abstandhalter durch äußere Einflüsse verformt bzw. in den Scheibenzwischenraum wandert (sog. "Girlanden-Effekt"), was zum Verlust der Haftung zwischen dem Abstandhalter und der Glasscheibe führen kann, womit die ganze Einheit nicht mehr gasdicht ist. Selbst wenn die Gasdichtigkeit nicht verloren geht, ergibt sich jedoch in jedem Falle eine visuelle Beeinträchtigung und somit ein ästhetisches Problem.

Die EP 2 190 919 A1 beschreibt den Aufbau von chemischen Bindungen über Hydrolyse-Kondensationsreaktionen zwischen silan-modifizierten Polymerbestandteilen eines Primardichtstoffes auf Polyisobutylenbasis und chemisch aktiven Hydroxylgruppen der Glasoberfläche sowie möglichen Bindungen an der Grenzfläche zu Silikon als Sekundärdichtstoff. Solche funktionelle Gruppen enthaltende thermoplastische Abstandhalter werden auch als sog. reaktive TPS bzw. TPA bzw. Reaktiv-TPS bzw. Reaktiv-TPA bezeichnet.

Entsprechende Reaktiv-TPS bzw. TPA Systeme sind durch die funktionellen bzw. reaktiven Gruppen nur begrenzt lagerstabil bzw. erfordern eine Herstellung, Lagerung und Handhabung/Applikation unter Ausschluss von (Luft)Feuchtigkeit.

Letztlich bestehen entgegengesetzte Anforderungsprofile an einen Reaktiv-TPS bzw. TPA: einerseits muss die Aktivität der funktionellen bzw. reaktiven Gruppen gewährleistet sein, um bei der Applikation eine gute Glasanhaftung zu gewährleisten, andererseits muss ein ausreichender Gehalt an Trockenmittel eingearbeitet sein, um die Funktion zur Trocknung des Scheibenzwischenraums zu gewährleisten.

Aufgabe der vorliegenden Erfindung ist daher die Bereitstellung eines verbesserten Dichtmassenverbunds aus einem Primärdichtstoff und einem härtbaren Sekundärdichtstoff auf Polyurethan- oder Polysulfidbasis oder auf Basis entsprechender silan-terminierter/-modifizierter Polyurethane oder Polysulfide, insbesondere mit einer verbesserten Haftung zwischen Primär- und Sekundärdichtstoff, vereinfachter Handhabung und verbesserter Lagerstabilität der Komponenten sowie einer chemischen Anhaftung des Dichtmassenverbunds an die Glasoberfläche.

Die Aufgabe wird gelöst durch ein System zur Herstellung eines Dichtmassenverbunds aus einem Primärdichtstoff und einem härtbaren Sekundärdichtstoff, enthaltend mindestens drei getrennt gelagerte Komponenten (A, B1, B2), wobei die Komponente (A) der Primärdichtstoff ist, umfassend:
a) ca. 30 - 85 Gew.-% mindestens eines olefinisches Polymers;
b) ca. 2 -35 Gew.-% mindestens eines mit reaktiven Gruppen modifizierten Polymers;
c) ca. 5 - 65 Gew.-% mindestens eines Füllstoffes;
d) ca. 5 - 25 Gew.-% mindestens eines Trockenmittels;
e) ca. 0 - 3 Gew.-% mindestens eines Stabilisators;

und der Sekundärdichtstoff ein Dichtstoff auf Polyurethan- oder Polysulfid-Basis ist, erhältlich aus einer Polymerkomponente (B1) und einer Härterkomponente (B2),
wobei der Sekundärdichtstoff einen Katalysator und/oder Initiator enthält, durch den die reaktiven Gruppen im Primärdichtstoff bei Kontakt mit dem Sekundärdichtstoff aktivierbar sind.

Es wurde überraschend gefunden, dass der Dichtmasseverbund gemäß der vorliegenden Erfindung eine starke Haftung zwischen dem Primärdichtstoff und dem Sekundärdichtstoff aufweist. Zudem ist eine gute Haftung zur Glasoberfläche zu beobachten.

Ohne an eine bestimmte Theorie gebunden zu sein, wird angenommen, dass über den Kontakt zwischen Primärdichtstoff und Sekundärdichtstoff an der Grenzfläche eine Aktivierung der reaktiven Gruppen des Primärdichtstoffes durch den im Sekundärdichtstoff enthaltenen Katalysator erfolgt, sodass eine Reaktion zwischen den reaktiven Gruppen des Primärdichtstoffes, insbesondere hydrolysierbaren Silylalkoxygruppen, und den funktionellen Gruppen des Sekundärdichtstoffes an der Grenzfläche während dessen Aushärtung (Quervernetzung) erfolgt. Zusätzlich erfolgt eine Verbindung von Primärdichtstoff mit der Glasoberfläche, insbesondere über die Hydroxygruppen der Glasoberfläche. Diese Annahme wird durch die auftretende Haftung insbesondere im Fall von Polyurethan als Sekundärdichtstoff gestützt, da dort die Polymerkomponente und die Vernetzerkomponente im Wesentlichen wasserfrei sind.

Die Glasoberfläche weist üblicherweise OH-Funktionalitäten auf. Je nach eingesetztem Sekundärdichtstoff weist dieser SH-Funktionalitäten (Polysulfid), OH- oder NCO-Funktionalitäten (Polyurethan) auf. Die reaktiven Gruppen sind entsprechend bevorzugt zur Reaktion mit OH-, SH- oder NCO-Funktionalitäten geeignet.

Gemäß einer bevorzugten Ausgestaltung der Erfindung sind die reaktiven Gruppen des modifizierten Polymers b) ausgewählt aus mindestens einer endständigen oder innerhalb des Polymergerüsts statistisch verteilten Gruppe, ausgewählt aus der Gruppe enthaltend Alkoxysilyl, Carboxy, Amino, Epoxy, Vinyl, Methacryl, Methacryloxy, Carbamato, Mercapto, Glycidoxy, Hydroxy, Isocyanato und Kombinationen davon. Insbesondere die Amino und Hydroxy-Gruppen können optional substituiert sein, z.B. mit Alkyl, insbesondere mit jeweils 1 bis 8 Kohlenstoffatomen im Alkylteil.

Es ist weiterhin bevorzugt, dass die reaktiven Gruppen ausgewählt sind aus mindestens einer endständigen oder innerhalb des Polymergerüsts statistisch verteilten Alkoxysilyl-Gruppe, insbesondere mit jeweils 1 bis 8 Kohlenstoffatomen im Alkoxyteil, vorzugsweise Di- oder Trialkoxysilylgruppen, besonders bevorzugt Di- oder Tri-methoxy- oder -ethoxysilyl.

Ein Beispiel für ein entsprechendes Polymer b) ist ein mit Alkoxysilylgruppen modifiziertes amorphes Polyalphaolefin, z.B. Vestoplast^{®} 206 (Fa. Evonik). Die Herstellung von silanfunktionellen Polyisobutylenen bzw. Polybutadienen ist beschrieben in EP-A-287025, EP-A-452875, EP-A-434840, EP-A-537660, EP-A-312967.

Vorteilhaft ist das mit reaktiven Gruppen modifizierte Polymer b) bi-, tri oder multifunktionell, vorzugsweise bifunktionell. Beispielsweise weist ein bifunktionelles Polymer eine Alkoxysilyl-Gruppe zur Anbindung an OH-Funktionen, z.B. der Glasoberfläche, und eine reaktive organofunktionelle Gruppe, wie Amino-, Epoxy- oder Isocyanato-Gruppe zur Anbindung an eine NCO- oder OH-Funktion eines Polyurethans auf. Im Falle von Polysulfid können neben einer Alkoxysilyl-Gruppe zur Anbindung an OH-Funktionen beispielsweise eine reaktive organofunktionelle Gruppe, wie eine Epoxy- oder Vinyl-Gruppe zur Anbindung an eine SH-Funktion eines Polysulfids enthalten sein. Die Amino-, Epoxy- und Vinylgruppen können gleichzeitig zur Anbindung an das olefinische Polymer a) dienen, wenn dieses z.B. ein Polyolefin, Polyether oder Polyacrylat ist.

Bevorzugt weist das Polymer b) eine Alkoxysilylgruppe, vorzugsweise Trialkoxysilyl, insbesondere Trimethoxysilyl, und eine weitere Gruppe ausgewählt aus Carboxy, Amino, Epoxy, Vinyl, Methacryl, Methacryloxy, Carbamato, Mercapto, Glycidoxy, Hydroxy und Isocyanato auf. Die Alkoxysilylgruppe und/oder die weitere Gruppe sind vorzugsweise endständig.

Bei einem tri- oder multifunktionellen mit reaktiven Gruppen modifizierten Polymer b) sind beispielsweise neben einer Alkoxysilyl-Gruppe zur Anbindung an OH-Funktionen der Glasoberfläche und einer Epoxy- oder Vinyl-Gruppe zur Anbindung an eine SH-Funktion eines Polysulfids oder einer Amino-, Epoxy- oder Isocyanato-Gruppe zur Anbindung an eine NCO- oder OH-Funktion eines Polyurethans noch weitere reaktive organofunktionelle Gruppen vorhanden, wie Methacryloxy- oder Methacrylgruppen, wenn das olefinische Polymer a) z.B. ein Polyolefin, Polyester oder Polyacrylat ist.

Alternativ können vorteilhaft mindestens zwei bifunktionelle mit reaktiven Gruppen modifizierte Polymere b) eingesetzt werden.

Entsprechende mit reaktiven Gruppen modifizierte Polymere b) sind beispielsweise über die sog. Silan-terminierteZ-modifizierte Polymere (STP/SMP)-Technologie herstellbar (M. Roessing, B. Brugger, Neue Polymere mit flexiblem Rückgrat, adhäsion 3/2011, S.24-27, https://silane-modified-polymers.evonik.com/product/break-thru/downloads/adhaesion-2011-03-silanmodifizierte-kleb-und-dichtstoffe.pdf). Die EP 2277931 B1 beschreibt ebenfalls mit reaktiven Gruppen modifizierte Polyolefine und deren Herstellung.

Die mit funktionellen Gruppen modifizierten Polymere b) können alternativ auch organofunktionelle Silane (z.B. Genosil^{®}, Fa. Wacker Chemie AG), vorzugsweise auf einem polymeren oder mineralischen Trägersystem (z.B. Deolink^{®} /FamaSil, Fa. DOG Chemie) sein. In diesem Fall erfolgt vorteilhaft zunächst eine Reaktion der organofunktionellen Gruppe des Silans mit einer reaktiven Gruppe, z.B. einer Endgruppe, des olefinischen Polymers a) und/oder des Sekundärdichtstoffes unter Bildung eines Silan-terminierten Polymers (STP-Technologie). Das erhaltene Silan-terminierte Polymer geht dann eine chemische Bindung z.B. mit OH-Funktionen der Glasoberfläche und/oder des Sekundärdichtstoffes ein.

Das mindestens eine olefinische Polymer a) ist in einem Gehalt von ca. 30 - 85 Gew.-%, bevorzugt ca. 30 - 70 Gew.-%, besonders bevorzugt ca. 35 - 60 Gew.-%, insbesondere ca. 35 - 50 Gew.-% bezogen auf das Gewicht der Komponente (A) vorhanden.

Die Polymere a) weisen eine zahlenmittlere Molmasse (Mn) im Bereich von ca. 400 - 600000, vorzugsweise im Bereich von ca. 5000 bis 300000 auf und sind vorzugsweise ausgewählt sind aus Homo- oder Copolymeren, aufgebaut aus den Monomeren Ethylen, Propylen, n-Buten und deren höheren Homologen und Isomeren, aus funktionellen Vinylverbindungen, wie Vinylacetat, Vinylchlorid, Styrol, α-Methylstyrol, und aus ungesättigten Säurederivaten, wie Acrylsäure, Methacrylsäure, Acrylate, Methacrylate, Acrylnitril.

In einer Ausgestaltung der Erfindung sind die olefinischen Polymere a) ausgewählt aus der Gruppe enthaltend Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO).

Das mindestens eine mit reaktiven Gruppen modifizierte Polymer b) ist in einem Gehalt von ca. 2 - 35 Gew.-%, bevorzugt ca. 4 - 25 Gew.-%, insbesondere ca. 5 - 15 Gew.-% bezogen auf das Gewicht der Komponente (A) vorhanden.

Das Polymergerüst des modifizierten Polymers b) ist bevorzugt ausgewählt aus Homo- oder Copolymeren, aufgebaut aus den Monomeren Ethylen, Propylen, n-Buten und deren höheren Homologen und Isomeren, aus funktionellen Vinylverbindungen, wie Vinylacetat, Vinylchlorid, Styrol, α-Methylstyrol, und aus ungesättigten Säurederivaten, wie Acrylsäure, Methacrylsäure, Acrylate, Methacrylate, Acrylnitril.

Das Polymergerüst des modifizierten Polymers b) ist bevorzugt ebenfalls ausgewählt aus der Gruppe enthaltend Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO), Polyester, Polyether und Polyether-Polyester vorzugsweise vollständig oder teilweise basierend auf nachwachsenden Rohstoffen, wie z.B. DYNACOLL^{®}-Produkte der Fa. Evonik oder Rokrapol^{®}-Produkte der Fa. Robert Kraemer GmbH & Co. KG. Die zahlenmittlere Molmasse (Mn) des mit reaktiven Gruppen des modifizierten Polymers b) ist bevorzugt im Bereich von ca. 100 bis 100000, insbesondere ca. 100 bis 15000, ganz besonders ca. 5000 - 15000.

Die Füllstoffe sind pulverförmige Zuschlagstoffe. Der mindestens eine Füllstoff c) ist in einem Gehalt von ca. 5 - 65 Gew.-%, bevorzugt ca. 10 - 45 Gew.-%, insbesondere ca. 20 - 45 Gew.-% bezogen auf das Gewicht der Komponente (A) vorhanden.

Die Füllstoffe c) sind bevorzugt feinteilig und im Wesentlichen inert. Unter feinteilig wird im Rahmen der Erfindung ein minimaler mittlerer Teilchendurchmesser im Bereich von ca. 20 - 100 nm und ein maximaler mittlerer Teilchendurchmesser im Bereich von ca. 0,8 - 3 µm verstanden.

Vorteilhaft sind die Füllstoffe ausgewählt aus der Gruppe enthaltend Ruße, gefällte oder pyrogene Kieselsäure, ggfs. oberflächenbehandelte gefällte oder gemahlene Kreide, Zeolithe, Bentonite, Magnesiumcarbonat, Kieselgur, Tonerde, Ton, Silikate, wie insbesondere Kaolin, Talkum und Glimmer, Schwerspat, Titandioxid, Eisenoxid, Zinkoxid, Sand, Quarz, Flint, Aluminiumpulver, Zinkpulver, Glaspulver/-fasern, Kohlenstofffasern, Graphit, Siliziumoxide und Mischungen davon. Entsprechende Füllstoffe sind dem Fachmann geläufig und kommerziell erhältlich, z.B. Printex^{®} (Fa. Orion Engineered Carbons), Raven^{®} (Fa. Birla Carbon), Black Pearls ^{®} (Fa. Cabot), Omyacarb ^{®} (Fa. Omya GmbH), Calprec ^{®} (Fa. Calcinor), Imerseal^{®} (Fa. Imerys Carbonates), Aerosil^{®} (Fa. Evonik), Cabosil ^{®} (Fa. Cabot Corporation).

Das mindestens eine Trockenmittel d) ist ein physikalisch oder chemisch Wasser bindender Stoff. Das mindestens eine Trockenmittel d) ist in einem Gehalt von ca. 5 - 25 Gew.-%, bevorzugt ca. 10 - 25 Gew.-%, insbesondere ca. 10 - 20 Gew.-% bezogen auf das Gewicht der Komponente (A) vorhanden.

Die Trockenmittel d) sind bevorzugt ausgewählt aus wasserbindenden Füllstoffen, wie Kieselgel, Calciumoxid oder Zeolithen mit definierten Porendurchmessern, insbesondere Molsieben vom Typ 3A bis 10A. Entsprechende Trockenmittel sind dem Fachmann geläufig und kommerziell erhältlich, z.B. Kezadol PCI (Fa. Kettlitz), CALFRIT^{®} (Fa. Calcinor), PURMOL^{®} (Fa. Zeochem AG).

Polymere Werkstoffe sind generell empfindlich gegen Einfluss von Sauerstoff und Wärme, die zu einer sog. Alterung durch Veränderung der Festigkeit, Dehnbarkeit und Härte führen. Erfindungsgemäß ist daher bevorzugt ein Einsatz mindestens eines Stabilisators (bzw. Alterungsschutzmittels) vorgesehen. Der mindestens eine Stabilisator e) ist in einem Gehalt von ca. 0 - 3 Gew.-%, bevorzugt ca. 0,1 - 2 Gew.-%, insbesondere ca. 0,2 - 1 Gew.-% bezogen auf das Gewicht der Komponente (A) vorhanden.

Der mindestens eine Stabilisator e) ist bevorzugt ausgewählt aus der Gruppe enthaltend sterisch gehinderte Phenole, Thioether, Mercapto-Verbindungen, Phosphorester, Benzotriazole, Benzophenone, sterisch gehinderte Amine (Hindered amine light stabilizers, HALS) und Ozonschutzmittel. Entsprechende Alterungsschutzmittel sind dem Fachmann geläufig und kommerziell erhältlich, z.B. Eversorb^{®} (Fa. Everlight Chemical Industrial Corp.), Evernox^{®} (Fa. Everspring Chemical Co., Ltd.), Tinuvin^{®} (Fa. BASF).

Die Komponente (A) kann zusätzlich ca. 0,1 - 2 Gew.-%, bevorzugt ca. 0,2 - 1,5 Gew.-% bezogen auf Gewicht der Komponente (A) organofunktionelle Silane als Haftvermittler und/oder Vernetzer enthalten, beispielsweise 3-Glycidoxy-Propyltrialkoxysilan, 3-Acryloxypropyltrialkoxysilan, 3-Aminopropyltrialkoxysilan, Vinyltrialkoxysilan, N-Aminoethyl-3-Aminopropyl-Methyldialkoxysilan, Phenylaminopropyltrialkoxysilan, Aminoalkyltrialkoxydisilan oder i-Butylmethoxysilan. Als Alkoxygruppe sind dabei die Methoxy- bzw. Ethoxygruppe besonders bevorzugt.

Zur Verbesserung der Lagerstabilität und Applikation ist in einer Ausführungsform der Erfindung vorgesehen die Komponente (A), d.h. den Reaktiv-TPS, durch Zugabe von wasserbindenden Stoffen wie organischen Silanen, beispielsweise Vinyltrimethoxysilane (VTMO), Diaminomethoxysilane (DAMO), im Bereich von ca. 0,1 bis 10 Gew. %, vorzugsweise ca. 0,2 bis 5 Gew. %, insbesondere ca. 0,5 bis 2 Gew. % bezogen auf die Komponente (A) oder durch physikalische Trocknung der Füllstoffe c), z.B. in einem Kontakttrockner, wie einem Schaufeltrockner, oder in einem Vakuumtrockner, wie einem Fließbetttrockner, zu deaktivieren, um so eine Vernetzung bzw. Aushärtung während der Lagerung und Applikation weitestgehend zu unterbinden.

Die Aktivierung des Reaktiv-TPS erfolgt durch physikalischen Kontakt mit dem Sekundärdichtstoff, der den Katalysator/Initiator und ggfs. Aktivierungsreagenzien, wie Wasser oder wasserhaltige Rohstoffe wie Kreiden und pyrogene Kieselsäuren (z.B. Aerosil^{®} Fa. Evonik) und wasserfreisetzende Rohstoffe, z.B. Hydrate, wie Calciumsulfat-Dihydrat, oder kristallwasserhaltige Salze, die in wässriger Lösung sauer oder basisch reagieren, wie Salze, bei denen das Anion ausgewählt ist unter Phosphat, Sulfat, meta-Silikat, Hydroxidsulfat und Hydroxidphosphat, oder Salze, die ein sauer oder basisch wirkendes Kation, ausgewählt unter Metallkationen von Metallen der Hauptgruppe III, der Nebengruppe VIII und Ammonium enthalten, insbesondere saure Salze des Aluminiums, insbesondere das Sulfat, das Chlorid und das Nitrat, die Aluminiumalaune des Ammoniumions und der Alkalimetalle, insbesondere des Natriums und des Kaliums, Salze des Eisens, wie Eisen-II-sulfat, Eisen-III-phosphat, Eisenalaun des Ammoniumions, sowie Ammoniumeisen-II-sulfat, basische Salze, wie Trinatriumphosphat, Ammoniumaluminiumalaun, Trimagnesiumphosphat und Natriummetasilikat,oder Hydroxide, wie Magnesiumhydroxid, im Bereich von ca. 0,1 bis 20 Gew. %, vorzugsweise ca. 1 bis 10 Gew. %, insbesondere ca. 2 bis 5 Gew. % enthält.

Als Katalysator und/oder Initiator, durch den die reaktiven Gruppen im Primärdichtstoff bei Kontakt mit dem Sekundärdichtstoff aktivierbar sind, können insbesondere alle bekannten Verbindungen eingesetzt werden, die die hydrolytische Spaltung der hydrolysierbaren Gruppen der Silangruppierungen, sowie die anschließende Kondensation der Si-OH-Gruppe zu Siloxangruppierungen (Vernetzungsreaktion bzw. Haftvermittlungsfunktion) katalysieren können. Der Katalysator und/oder Initiator ist bevorzugt ausgewählt ist aus der Gruppe enthaltend Titanate, wie Tetrabutyltitanat oder Titantetraacetylacetonat; Wismutverbindungen, wie Bismut-tris-2-ethylhexanoat; Zinnverbindungen, wie Zinncarboxylate, wie Dibutylzinndilaurat (DBTL), Dibutylzinndiacetat oder Dibutylzinndiethylhexanoat; Zinnoxide, wie Dibutylzinnoxid und Dioctylzinnoxid; Zinnoctylat, Dibutylzinndimaleat, Dibutylzinndiacetylacetonat und Reaktionsprodukte von Dibutylzinnoxid und Estern der Phthalsäure; Organoaluminumverbindungen, wie Aluminumtrisacetylacetonat; Chelatverbindungen, wie Zirconiumtetraacetylacetonat, Titan-tetra-acetylacetonat; Aminverbindungen oder ihre Salze mit Carbonsäuren, wie Octylamin, Cyclohexylamin, Benzylamin, Butylamin, Di-butylamin, Monoethanolamin, Triethanolamin, Diethylentriamin, Triethylentetramin, Triethylendiamin, Guanidin, Morpholin, N-methylmorpholin und 1 ,8-Diazabicyclo-(5,4,0)-undecen-7 (DBU), Silanhaftvermittler mit Aminogruppen, organische Sulfonsäuren, wie p-Toluensulfonsäure, Manganverbindungen, wie Mangan(IV)oxid; sowie Mischungen davon. Entsprechende Katalysatoren sind dem Fachmann geläufig und kommerziell erhältlich, z.B. Polycat^{®}, Dabco^{®}, KOSMOS^{®} (Fa. Evonik), TIB KAT^{®} (Fa. TIBChemicals), K-KAT^{®} (Fa. King Industries), REAXIS (Fa. Reaxis).

Der Katalysator/Initiator ist in mindestens einer der beiden Komponenten (B1) oder (B2) des Sekundärdichtstoffes enthalten, vorzugsweise in Komponente (B1). Der Gehalt an Katalysator/Initiator beträgt ca. 0,01 - 5 Gew.-%, bevorzugt ca. 0,05 - 4 Gew.-%, besonders bevorzugt ca. 0,05 - 2 Gew.-% bezogen auf die jeweilige Komponente (B1) oder (B2).

Eine bevorzugte Ausführungsform der Erfindung ist frei von Metallkatalysator/- initiator, eine andere bevorzugte Ausführungsform setzt Mischungen mehrerer Katalysatoren/Initiatoren ein.

Der Einsatz von Dichtstoffen auf Polyurethan- oder Polysulfid-Basis als Sekundärdichtstoffe in Dichtmassenverbunden, insbesondere für die Isolierglasherstellung, ist dem Fachmann geläufig (z.B. WO 2018/054791 A, WO 2009/060199 A, WO 2017/162839 A1). Ebenso ist dem Fachmann die Herstellung von Dichtstoffen auf Polyurethan- oder Polysulfid-Basis geläufig (z.B. WO 2018/116949 A1, WO 2011/078922 A, WO 2017/162839 A1). Entsprechende Produkte sind kommerziell erhältlich, z.B. IGK 130, IGK 330, Fa. IGK Isolierglasklebstoffe GmbH).

Im Rahmen der vorliegenden Erfindung ist der Dichtstoff auf Polyurethan- oder Polysulfid-Basis erhältlich aus einer Polymerkomponente bzw. Prepolymerkomponente (B1) und einer Vernetzer- bzw. Härterkomponente (B2), d.h. aus einem Zweikomponentensystem. Denkbar wäre auch ein Einsatz als einkomponentige Massen, die dann mit Luftfeuchtigkeit oder Luftsauerstoff aushärten.

Polyurethane werden grundsätzlich durch Reaktion von verschiedenen Isocyanaten mit verschiedenen Polyolen synthetisiert.

Gemäß einer Ausführungsform der Erfindung, in der der Sekundärdichtstoff ein Dichtstoff auf Polyurethan-Basis ist, ist die Polymerkomponente (B1) ausgewählt aus der Gruppe enthaltend Diole, Polyole, Polyesterpolyole, Polyester/Polyetherpolyole, vorzugsweise vollständig oder teilweise basierend auf nachwachsenden Rohstoffen (z.B. sog. Natural oil-based polyols (NOBP) z.B. auf Basis von Sojaöl, Sonnenblumenöl, Rapsöl, s. z.B. EP 2 516 576 B1, Elevance C18 (Fa. Elevance Renewable Sciences), Neukapol (Fa. Altropol Kunststoff GmbH), Durez-Ter (Fa. SBHPP)) und mit verfügbarem acidem Wasserstoff (wie z.B. OH-; SH-, NH-Gruppen usw.)-modifizierte Polyolefine mit einem Molekulargewichtsbereich von etwa 500 bis 10000, bevorzugt von etwa 1000 bis etwa 4000 und Funktionalität von etwa 2 bis 4, bevorzugt von etwa 2 bis 3 und die Härterkomponente (B2) ist ausgewählt aus der Gruppe enthaltend Mono-, Di-, Tri- und Polyisocyanate, wie Benzylisocyanat, Toluolisocyanat, Phenylisocyanat und Alkylisocyanate, bei denen die Alkylgruppe 1 bis 12 Kohlenstoffatome enthält, aromatische, cycloaliphatische und aliphatische Isocyanate, wie m-Phenylendiisocyanat, Toluol-2-4-diisocyanat, Toluol-2-6-diisocyanat, Isophorondiisocyanat, 1,3- und / oder 1,4-Bis (isocyanatomethyl) cyclohexan (einschließlich cis- oder trans- Isomere), Hexamethylen-1,6-diisocyanat, Tetramethylen-1,4-diisocyanat, Cyclohexan-1,4-diisocyanat, Hexahydrotoluoldiisocyanat, Methylenbis(cyclohexanisocyanat) (H12MDI), Naphthylen-1,5-diisocyanat, Methoxyphenyl -2,4-Diisocyanat, Diphenylmethan-4,4'-diisocyanat, 4,4'-Biphenylendiisocyanat, 3,3'-Dimethoxy-4,4'-Biphenyldiisocyanat, 3,3'-Dimethyl-4-4'-Biphenyldiisocyanat, 3,3'-Dimethyldiphenylmethan-4,4'-diisocyanat, 4,4', 4"-Triphenylmethantriisocyanat, Polymethylenpolyphenylisocyanat (PMDI), Toluol-2,4,6-Triisocyanat und 4, 4'-Dimethyldiphenylmethan-2,2', 5,5'-tetraisocyanat, deren Derivate, die Biuret-, Harnstoff-, Carbodiimid-, Allophonat- und / oder Isocyanuratgruppen enthalten, und Mischungen davon.

Erfindungsgemäß geeignet sind auch entsprechende silanterminierte Polyurethane. Derartige Polyurethane sind dem Fachmann geläufig (z.B. EP 1 245 601 A1, WO 2010/094725 A1 und WO 2017/162839 A1).

Das Volumenverhältnis von Polymerkomponente (B1) zu Härterkomponente (B2) liegt im Bereich von 100:8 bis 100:12, vorzugsweise 100:9 bis 100:11, insbesondere 100:10.

Unter einem Polysulfid wird im Rahmen der vorliegenden Erfindung ein Polymer verstanden, das Thioether-Gruppen aufweist. Die Polysulfide können linear oder verzweigt aufgebaut sein oder auch vernetzt sein. Neben den Thioether-Gruppen können die erfindungsgemäß eingesetzten Polysulfide auch noch weitere funktionelle Gruppen in der Haupt- oder in einer Seitenkette aufweisen. Weitere funktionelle Gruppen sind insbesondere Ether-Gruppen, aromatische Gruppen, Hydroxy- oder Epoxygruppen, oder Urethan-Gruppen. Die erfindungsgemäß eingesetzten Polysulfide sind bevorzugt polymere Alkylthioether, wobei die Alkylgruppen linear oder verzweigt sein können. Polysulfide werden insbesondere durch Polykondensation von Alkalipolysulfiden, beispielsweise Natriumpentasulfid, mit Alkyldihalogeniden, wie z.B. 1,2-Dichlorethan und Bis(2-chlorethoxy)methan, hergestellt. Es können auch Trihalogenide, wie beispielsweise 1,2,3-Trichlorpropan, zur Vernetzung zugesetzt werden.

Die Eigenschaften der Polysulfide sind insbesondere von der Art des Alkylrests, dem Schwefelgehalt und der Molmasse sowie der Vernetzungsdichte des Polysulfids abhängig. Vorzugsweise liegen die Molmassen der erfindungsgemäß eingesetzten Polysulfide im Bereich von ca. 1000 bis 8000 g/mol. Die Vernetzungsdichte beeinflusst die Härte der Polysulfide, wobei die Vernetzung beispielsweise über Schwefelbrücken durch Reaktion terminaler MercaptoGruppen erfolgt. Erfindungsgemäß liegt die Vernetzungsdichte im Bereich von ca. 0,01 bis 10 Mol-%, vorzugsweise ca. 0,02 bis 5 Mol-%, insbesondere ca. 0,05 bis 2 Mol-%.

Gemäß einer Ausführungsform der Erfindung, in der der Sekundärdichtstoff ein Dichtstoff auf Polysulfid-Basis ist, ist die Polymerkomponente (B1) ausgewählt ist aus der Gruppe enthaltend Alkalipolysulfide, wie Natriumpentasulfid, Polysulfidpolymere mit einem Molekulargewichtsbereich von etwa 500 bis 8000, bevorzugt von etwa 1000 bis etwa 4000, der allgemeinen Formel HS-(RSS)-RSH, worin R einen Kohlenwasserstoffrest, Oxakohlenwasserstoffrest oder Thiakohlenwasserstoffrest bedeutet, wie einen Ethylformalrest, Butylformalrest Ethyletherrest oder Butyletherrest. Wenn erwünscht, können zusätzlich zu diesen flüssigen Polythiopolymeren mit Thioendgruppen auch einige Polysulfidpolymere, worin die endständigen Thiogruppen durch Behandlung mit Hitze und Säure in Hydroxylendgruppen umgewandelt wurden, zugemischt werden.

Die Härterkomponente (B2) ist gemäß einer Ausführungsform ausgewählt aus der Gruppe enthaltend ein oxidatives Härtungsmittel, wie Epoxide, Oxidationsmittel, wie Mangan(IV)oxid, Bleioxid, Alkyldihalogenide, Trihalogenalkylverbindungen, basische Aminkatalysatoren, wie ein tertiärer Aminkatalysator, wie Tris-(dimethylaminomethyl)phenol, eine Thiuramverbindung, wie Dipentamethylenthiuramtetrasulfid (DPTT), und molekularen Schwefel.

Erfindungsgemäß geeignet sind auch entsprechende silanterminierte Polysulfide. Derartige Polysulfide sind dem Fachmann geläufig (z.B. S. Witzel, Synthese neuer funktioneller Polysulfid-Telechele und deren industrielle Applikation, Dissertation, 2007, https://www.db-thueringen.de/servlets/MCRFileNodeServlet/dbt_derivate_00011522/Dissertation. pdf).

Das Volumenverhältnis von Polymerkomponente (B1) zu Härterkomponente (B2) liegt im Bereich von 100:8 bis 100:12, vorzugsweise 100:9 bis 100:11, insbesondere 100:10.

In einer Ausgestaltung der Erfindung werden SH-terminierte Polymere mit Urethangruppen, der allgemeinen Struktur HS-(Urethan)-Polymergerüst-(Urethan)-SH als Polymerkomponente (B1) des Dichtstoffes auf Polysulfid-Basis eingesetzt. In diesem Falle ist die Polymerkomponente (B1) ausgewählt aus thiol- und urethanhaltigen Verbindungen, mit einem Polymergerüst, ausgewählt aus der Gruppe enthaltend Diole, Polyole, Polyesterpolyole, Polyester/Polyetherpolyole, vorzugsweise vollständig oder teilweise basierend auf nachwachsenden Rohstoffen (z.B. sog. Natural oil-based polyols (NOBP) z.B. auf Basis von Sojaöl, Sonnenblumenöl, Rapsöl, s. z.B. EP 2 516 576 B1, Elevance C18 (Fa. Elevance Renewable Sciences), Neukapol (Fa. Altropol Kunststoff GmbH), Durez-Ter (Fa. SBHPP)) und mit verfügbarem acidem Wasserstoff (wie z.B. und OH-; SH-, NH-Gruppen usw.)-modifizierte Polyolefine mit einer zahlenmittleren Molmasse im Bereich von etwa 100 bis 10000, bevorzugt von etwa 1000 bis etwa 8000, worin Urethan-Funktionen durch Umsetzung mit Isocyanaten aus der Gruppe enthaltend Mono-, Di-, Tri- und Polyisocyanate, wie Benzylisocyanat, Toluolisocyanat, Phenylisocyanat und Alkylisocyanate, bei denen die Alkylgruppe 1 bis 12 Kohlenstoffatome enthält, aromatische, cycloaliphatische und aliphatische Isocyanate, wie m-Phenylendiisocyanat, Toluol-2-4-diisocyanat, Toluol-2-6-diisocyanat, Isophorondiisocyanat, 1,3- und / oder 1,4-Bis (isocyanatomethyl) cyclohexan (einschließlich cis- oder trans- Isomere), Hexamethylen-1,6-diisocyanat, Tetramethylen-1,4-diisocyanat, Cyclohexan-1,4-diisocyanat, Hexahydrotoluoldiisocyanat, Methylenbis(cyclohexanisocyanat) (H12MDI), Naphthylen-1,5-diisocyanat, Methoxyphenyl -2,4-Diisocyanat, Diphenylmethan-4,4'-diisocyanat, 4,4'-Biphenylendiisocyanat, 3,3'-Dimethoxy-4,4'-Biphenyldiisocyanat, 3,3'-Dimethyl-4-4'-Biphenyldiisocyanat, 3,3'-Dimethyldiphenylmethan-4,4'-diisocyanat, 4,4', 4"-Triphenylmethantriisocyanat, Polymethylenpolyphenylisocyanat (PMDI), Toluol-2,4,6-Triisocyanat und 4, 4'-Dimethyldiphenylmethan-2,2', 5,5'-tetraisocyanat, und deren Derivate, die Biuret-, Harnstoff-, Carbodiimid-, Allophanat- und/oder Isocyanuratgruppen enthalten, und Mischungen davon, eingeführt sind und terminale Thiolgruppen vorhanden sind, vorzugsweise in Form von difunktionellen thiolhaltigen Gruppen, die über eine Alkylgruppe mit 1 bis 12 Kohlenstoffatomen an die Urethanfunktion gebunden sind und mindestens eine Thiolfunktion und eine weitere Funktion ausgewählt aus Hydroxy, Epoxy und Amino enthalten.

Gemäß einer Ausgestaltung der Erfindung kann der Sekundärdichtstoff zusätzlich Hilfsstoffe und Additive enthalten, bevorzugt ausgewählt aus der Gruppe enthaltend Weichmacher, wie Mineralöle, Weißöle, paraffinische Kohlenwasserstoffe, Phthalate, Adipate und Weichmacher auf Basis natürlicher Öle, insbesondere von Samen oder Nüssen, wie Sojaöl, Leinsamenöl, Kokosöl, Palmöl, Olivenöl, Baumwollsamenöl oder Rizinusöl, die chemisch modifiziert sein können, z.B. durch Epoxidierung, Acylierung oder Veresterung, wie Soja-basierte Epoxy-Fettsäuremethylester (EFAME) oder acetylierte Stearate (z.B. WO 2012/015997 A1); Stabilisatoren, wie Antioxidantien, UV-Stabilisatoren oder Hydrolyse-Stabilisatoren; Füllstoffe, Pigmente, wie Ruß, gefällte oder pyrogene Kieselsäure, ggfs. oberflächenbehandelte gefällte oder gemahlene Kreide, Zeolithe, Bentonite, Magnesiumcarbonat, Kieselgur, Tonerde, Ton, Kaolin, Talkum, Schwerspat, Titandioxid, Eisenoxid, Zinkoxid, Sand, Quarz, Flint, Glimmer, Aluminiumpulver, Zinkpulver, Glaspulver/-fasern, Kohlenstofffasern, Graphit, Silikate, Siliziumoxide; Verdünner bzw. Reaktivverdünner, Trockenmittel, wie wasserbindende Füllstoffe, insbesondere Kieselgel, Calciumoxid oder Zeolithe mit definierten Porendurchmessern, insbesondere Molsiebe 3A-10A, hydrolysierbare Silanverbindungen; Haftvermittler, insbesondere organofunktionelle Silane wie hydroxyfunktionelle, (meth)acryloxyfunktionelle, mercaptofunktionelle, aminofunktionelle oder epoxyfunktionelle Silane; Fungizide, Flammschutzmittel, Katalysatoren, wie Manganverbindungen, wie Mangan(IV)oxid, rheologische Hilfsmittel, Farbpigmente oder Farbpasten, und Mischungen davon. Diese können in der Polymerkomponente (B1) und/oder der Härterkomponente (B2) enthalten sein.

Typischerweise ist die Polymerkomponente (B1) des Sekundärdichtstoffes aufgebaut aus:
a) ca. 4 - 30 Gew.-%, vorzugsweise ca. 6 - 20 Gew.-% mindestens eines Polymers (PU-basiert: Polyol, PS-basiert: Polysulfid, SH-terminiertes Polymer mit Urethangruppen);
b) ca. 50 - 80 Gew.-%, vorzugsweise ca. 55 - 75 Gew.-% mindestens eines Füllstoffes;
c) ca. 10 - 30 Gew.-%, vorzugsweise ca. 12 - 20 Gew.-% mindestens eines Weichmachers;
d) ca. 0 - 10 Gew.-%, vorzugsweise ca. 0 - 5 Gew.-% mindestens eines Trockenmittels;
e) ca. 0 - 5 Gew.-%, vorzugsweise ca. 0,05 - 4 Gew.-% mindestens eines Katalysators;
f) ca. 0 - 3 Gew.-%, vorzugsweise ca. 0,1 - 2 Gew.-% mindestens eines Stabilisators.

Typischerweise ist die Härterkomponente (B2) aufgebaut aus:
a) ca. 5 - 50 Gew.-%, vorzugsweise ca. 10 - 40 Gew.-%, mindestens eines Vernetzers;
b) ca. 5 - 50 Gew.-%, vorzugsweise ca. 10 - 45 Gew.-% mindestens eines Füllstoffes;
c) ca. 30 - 60 Gew.-%, vorzugsweise ca. 35 - 55 Gew.-% mindestens eines Weichmachers;
d) ca. 0 - 10 Gew.-%, vorzugsweise ca. 0 - 5 Gew.-% mindestens eines Trockenmittels;
e) ca. 0 - 5 Gew.-%, vorzugsweise ca. 0 - 4 Gew.-% mindestens eines Katalysators;
f) ca. 0 - 3 Gew.-%, vorzugsweise ca. 0,1 - 2 Gew.-% mindestens eines Stabilisators.

Dabei ist der Katalysator/Initiator jedoch in mindestens einer der beiden Komponenten (B1) oder (B2) des Sekundärdichtstoffes enthalten, vorzugsweise in Komponente (B1).

Die Polymerkomponente (B1) kann nur aus dem entsprechenden Polymer und dem Katalysator/Initiator bestehen.

Sofern der Katalysator/Initiator in der Härterkomponente (B2) vorhanden ist, kann die Polymerkomponente (B1) auch nur aus dem entsprechenden Polymer bestehen.

Es ist erfindungsgemäß bevorzugt, dass die Komponente (A) in gelagertem Zustand frei von Katalysator ist. Gemäß einer Ausführungsform enthält die Komponente (A) in gelagertem Zustand 0,001 bis 1 Gew.-%, vorzugsweise 0,01 bis 0,1 Gew.-% Katalysator, ausgewählt aus der Gruppe enthaltend Titanate, wie Tetrabutyltitanat oder Titantetraacetylacetonat; Wismutverbindungen, wie Bismut-tris-2-ethylhexanoat; Zinnverbindungen, wie Zinncarboxylate, wie Dibutylzinndilaurat (DBTL), Dibutylzinndiacetat oder Dibutylzinndiethylhexanoat; Zinnoxide, wie Dibutylzinnoxid und Dioctylzinnoxid; Zinnoctylat, Dibutylzinndimaleat, Dibutylzinndiacetylacetonat und Reaktionsprodukte von Dibutylzinnoxid und Estern der Phthalsäure; Organoaluminumverbindungen, wie Aluminumtrisacetylacetonat; Chelatverbindungen, wie Zirconiumtetraacetylacetonat, Titan-tetra-acetylacetonat; Aminverbindungen oder ihre Salze mit Carbonsäuren, wie Octylamin, Cyclohexylamin, Benzylamin, Butylamin, Di-butylamin, Monoethanolamin, Triethanolamin, Diethylentriamin, Triethylentetramin, Triethylendiamin, Guanidin, Morpholin, N-methylmorpholin und 1 ,8-Diazabicyclo-(5,4,0)-undecen-7 (DBU), Silanhaftvermittler mit Aminogruppen sowie Mischungen davon.

Der Primärdichtstoff (Komponente (A)), der Sekundärdichtstoff und dessen Komponenten (B1) und (B2) können durch Mischen der Bestandteile mit bekannten Vorrichtungen hergestellt werden. Optional kann die Mischung unter Schutzgas oder Vakuum durchgeführt werden. Es kann notwendig sein, das Mischen der Bestandteile bei erhöhter Temperatur durchzuführen, sodass eine Schmelze einer oder mehrerer Bestandteile vorliegt. Ebenso ist es möglich, entsprechende Zusammensetzungen kontinuierlich in einem Extruder herzustellen. Die Reihenfolge der Zugabe und des Vermischens ist von Viskosität, Konsistenz und Menge der einzelnen Bestandteile abhängig. Dabei sollen die Feststoffe in den flüssigen Bestandteilen gleichmäßig dispergiert werden. Eine gute Vermischung ist sicherzustellen, damit keine Separation einzelner Bestandteile auftreten kann. Die Art der Herstellung ist im Prinzip bekannt, der Fachmann kann diese abhängig von der Auswahl der Rohstoffe leicht ermitteln. Die Mischung der beiden Komponenten (B1) und (B2) des Sekundärdichtstoffes erfolgt dabei in einer Mischapparatur kurz vor dem Auftrag. Die Misch- und Applikationstemperatur für den Primärdichtstoff (Komponente (A)) beträgt vorteilhaft zwischen ca. 70 und 200°C, bevorzugt zwischen ca. 100 und 135°C. Die Mischtemperatur zur Herstellung der jeweiligen Komponenten (B1) und (B2) für den Sekundärdichtstoff liegt vorteilhaft zwischen ca. 20 und 100 °C, bevorzugt zwischen ca. 30 und 80 °C. Die Misch- oder Applikationstemperatur für den erhaltenen Sekundärdichtstoff (Mischung aus Komponenten (B1) und (B2)) beträgt zwischen ca. 10 und 40 °C, bevorzugt zwischen ca. 15 und 30 °C, insbesondere zwischen ca.20 und 25 °C.

Die Erfindung betrifft auch die Verwendung des erfindungsgemäßen Systems zur Herstellung von Isolierglas für Fenster, Wintergärten, structural glazing und Dachverglasungen; für Verglasungen in Land-, Wasser- und Luftfahrzeugen sowie zur Herstellung von Solarmodulen.

Weiterer Gegenstand der Erfindung ist ein Randverbund zur Herstellung von Zwei- oder Mehrscheiben-Isolierglas oder Solarmodulen, wobei ein Primärdichtstoff und ein Sekundärdichtstoff vorgesehen sind, wobei der Primärdichtstoff und der Sekundärdichtstoff in Form eines Dichtmassenverbunds erhältlich aus dem erfindungsgemäßen System vorliegen.

Der erfindungsgemäße Dichtmasseverbund ermöglicht große Abstände zwischen den Schreiben von bis über 20 mm, z.B. 20 - 30 mm, insbesondere bis 25 mm, bevorzugt 22 mm.

Ein weiterer Gegenstand der Erfindung ist eine Isolierglaseinheit umfassend mindestens zwei Glasscheiben und einen erfindungsgemäßen Randverbund.

Das Verfahren zur Herstellung einer Isolierglaseinheit unter Verwendung des erfindungsgemäßen Systems umfasst:
- Auftrag des Primärdichtstoffes (Komponente (A)) auf den Randbereich einer Glastafel mittels einer geeigneten Apparatur (z. B. Extruder oder Faßpumpe);
- deckungsgleiches Auflegen einer zweiten Glastafel auf die Dichtungsmasse;
- Verpressung der Isolierglaseinheit auf die vorgegebene Dicke;
- Mischung der beiden Komponenten (B1) und (B2) des Sekundärdichtstoffes und Auftrag der Dichtungsmasse in die zwischen den Glasscheiben und dem Primärdichtstoff gebildete Fuge;
- optional Wiederholung der Verfahrensschritte bei Mehrscheibenisolierglas mit mehr als zwei Glastafeln.

Die Isolierglaseinheit, hergestellt mit dem erfindungsgemäßen System bzw.

Randverbund, kann auch zur Verbesserung der Wärmedämm- und Schallschutzeigenschaften überwiegend mit mindestens einem Edelgas (z. B. Argon, Krypton oder Xenon), mindestens mit einem Schwergas (z. B. Schwefelhexafluorid) oder Mischungen der beiden Gasarten gefüllt sein.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Beispiel 1 Primärdichtstoff

Der Primärdichtstoff (Komponente (A)) wurde durch Mischen der einzelnen Bestandteile in einem Laborkneter bei einer Temperatur von 120 °C erhalten:

| | | Gew.-% |
|---|---|---|
| Oppanol N50 (Fa. BASF) | (a) olefinisches Polymer | 2,0 |
| Oppanol B15 (Fa. BASF) | (a) olefinisches Polymer | 25,0 |
| Oppanol B10 (Fa. BASF) | (a) olefinisches Polymer | 10,0 |
| Vestoplast 206 (Fa. Evonik) | (b) mit reaktiven Gruppen modifiziertes Polymer | 10,0 |
| Precarb 400 (Fa. Schaefer Kalk) | (c) Füllstoff | 20,0 |
| Printex V (Fa. Orion) | (c) Füllstoff | 25,0 |
| Kezadol PCI (Fa. Kettlitz) | (d) Trockenmittel | 5,0 |
| VTMO (Fa. Evonik) | (d) Trockenmittel | 3,0 |

### Beispiel 2 Sekundärdichtstoff (Polyurethan)

Die Polymerkomponente (B1) wurde durch Mischen der einzelnen Bestandteile in Laborspeedmischer bei einer Temperatur von 25 °C bis 40 °C erhalten:

| | | Gew.-% |
|---|---|---|
| Poly-BD (Cray Valley) | (a) Polyol | 17,2 |
| Hakuenka CCR (Shiraishi Calcium) | (b) Füllstoff | 27,9 |
| Omyacarb 3 (Omya) | (b) Füllstoff | 37,1 |
| Jayflex^{™} DINP (ExxonMobil Chemical) | (c) Weichmacher | 16,7 |
| PURMOL^{®} (Fa. Zeochem AG) | (d) Trockenmittel | 1,0 |
| TIB KAT 218 (TIB Chemicals) | (e) Katalysator | 0,1 |

Die Härterkomponente (B2) wurde durch Mischen der einzelnen Bestandteile in Laborspeedmischer bei einer Temperatur von 25 °C bis 40 °C erhalten:

| | | Gew.-% |
|---|---|---|
| Ongronat 2100 (BorsodChem) | (a) Vernetzer | 22,0% |
| Printex V (Orion) | (b) Füllstoff | 11,0% |
| Santicizer 261 A (Valtris) | (c) Weichmacher | 55,0% |
| PURMOL^{®} (Fa. Zeochem AG) | (d) Trockenmittel | 5,5% |
| Dynasylan GLYMO (Evonik) | Haftvermittler | 6,5% |

### Beispiel 3 Sekundärdichtstoff (Polysulfid)

Die Polymerkomponente (B1) wurde durch Mischen der einzelnen Bestandteile in Laborspeedmischer bei einer Temperatur von 25 °C bis 40 °C erhalten:

| | | Gew.-% |
|---|---|---|
| Poyethylenglykol mit der Molarmasse von 800 Da mit terminalen SH Gruppen | (a) Polymer | 20,0% |
| Hakuenka CCR (Shiraishi Calcium) | (b) Füllstoff | 15,0% |
| Omyacarb 3 (Omya) | (b) Füllstoff | 44,0% |
| Jayflex^{™} DINP (ExxonMobil Chemical) | (c) Weichmacher | 20,0% |
| Dynasylan GLYMO (Evonik) | Haftvermittler | 1,0% |

Härterkomponente B2 wurde durch Mischen der einzelnen Bestandteile in Laborspeedmischer bei einer Temperatur von 25 °C bis 40 °C erhalten:

| | | Gew.-% |
|---|---|---|
| MnO2 2NG (Shepherd) | (a) Vernetzer | 25% |
| Printex V (Orion) | (b) Füllstoff | 13% |
| Santicizer 261 A (Valtris) | (c) Weichmacher | 60% |
| DPTT (Akrochem) | (e) Katalysator | 2% |

### Versuch 1: Wechselwirkungen Reaktiv-TPS (Primärdichtstoff) mit Polyurethan-Sekundärdichtstoff

Eine Isolierglas-Testscheibe mit den Abmessungen von 500 × 350 mm und dem Scheibenaufbau 4 mm Floatglas/16 mm Scheibenzwischenraum/4 mm Floatglas wird mit der Dichtungsmasse gemäß dem erfindungsgemäßen Beispiel 1 (Primärdichtstoff, Komponente (A)) als thermoplastischem Abstandhalter und mit dem 2K-Polyurethan aus Beispiel 2 (Polymerkomponente (B1) und Härterkomponente (B2)) als Sekundärdichtstoff versiegelt.

Die so hergestellte Test-Scheibe wird anschließend bei normalen Klimabedingungen (23°C mit 50% rel. Luftfeuchte) gelagert. Nach ca. 2-3 Wochen Lagerzeit führt man einen sogenannten "Butterfly-Test" durch. Bei diesem Test wird eine Glasscheibe des Prüfmusters in der Mitte quer geschnitten, und die Glastafeln während einer Zeitdauer von ca. 10 s nach außen geöffnet. Im Fall der Test-Scheibe kann man die beiden Tafeln bis zum Winkel von 270° ohne Adhäsionsbruch weder des Primärdichtstoffes noch des Sekundärdichtstoffes mehrmals aufklappen. Anschließend wird ein Stück der Dichtstoff-Schnur (aus Primär- und Sekundärdichtstoff) aus der Testscheibe herausgeschnitten. Es ist nicht möglich, die Reaktiv-TPS Schnur von der Polyurethan-Schnur manuell abzutrennen, somit erkennt man starke Wechselwirkungen zwischen dem Primär- und Sekundärdichtstoff.

### Versuch 2: Wechselwirkungen Reaktiv-TPS (Primärdichtstoff) mit Polysulfid-Sekundärdichtstoff

Eine Platte aus dem TPS-Material gemäß Beispiel 1 mit den Abmessungen von 100 × 100 × 4 mm wird mit der Dichtungsmasse gemäß Beispiel 3 (Polymerkomponente (B1) und Härterkomponente (B2)) beschichtet. Die so hergestellten Test-Prüfkörper werden anschließend bei normalen Klimabedingungen (23°C mit 50% rel. Luftfeuchte) gelagert. Bereits nach 3 - 4 Wochen kann man den Sekundärdichtstoff von dem Reaktiv-TPS manuell nicht abtrennen und somit erkennt man starke Wechselwirkungen zwischen dem Primär- und Sekundärdichtstoff.

Die Erfindung bezieht sich auch auf sämtliche Kombinationen von bevorzugten Ausgestaltungen, soweit diese sich nicht gegenseitig ausschließen, insbesondere auch auf Kombinationen von Ober- und Untergrenzen verschiedener angegebener Bereiche. Bei einem angegebenen Bereich sind alle individuellen Werte und Unterbereiche zwischen der Ober- und Untergrenze sind enthalten und offenbart. Beispielsweise kann bei einem Bereich von 5 bis 45 der Wert von einer unteren Grenze von 5, 10, 15 oder 20 bis zu einer oberen Grenze von 30, 35, 40 oder 45 reichen. Die Angaben "etwa" oder "ca." in Verbindung mit einer Zahlen- oder Bereichsangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

## Patentansprüche

1. System zur Herstellung eines Dichtmassenverbunds aus einem Primärdichtstoff und einem härtbaren Sekundärdichtstoff, enthaltend mindestens drei getrennt gelagerte Komponenten (A, B1, B2), wobei die Komponente (A) der Primärdichtstoff ist, umfassend:
a) ca. 30 - 80 Gew.-% mindestens eines olefinisches Polymers;
b) ca. 2 - 35 Gew.-% mindestens eines mit reaktiven Gruppen modifizierten Polymers;
c) ca. 5 - 65 Gew.-% mindestens eines Füllstoffes;
d) ca. 5 - 25 Gew.-% mindestens eines Trockenmittels;
e) ca. 0 - 3 Gew.-% mindestens eines Stabilisators;
und der Sekundärdichtstoff ein Dichtstoff auf Polyurethan- oder Polysulfid-Basis ist, erhältlich aus einer Polymerkomponente (B1) und einer Härterkomponente (B2),
wobei der Sekundärdichtstoff einen Katalysator und/oder Initiator enthält, durch den die reaktiven Gruppen im Primärdichtstoff bei Kontakt mit dem Sekundärdichtstoff aktivierbar sind.

2. System nach Anspruch 1, **dadurch gekennzeichnet, dass** die reaktiven Gruppen zur Reaktion mit OH-, SH- oder NCO-Funktionalitäten geeignet sind.

3. System nach Anspruch 1 oder 2, **dadurch gekennzeichnet, dass** die reaktiven Gruppen ausgewählt sind aus mindestens einer endständigen oder innerhalb des Polymergerüsts statistisch verteilten Gruppe, ausgewählt aus der Gruppe enthaltend Alkoxysilyl, Carboxy, ggfs. substituiertes Amino, Epoxy, Vinyl, Methacryl, Methacryloxy, Carbamato, Mercapto, Glycidoxy, ggfs. substituiertes Hydroxy, Isocyanato und Kombinationen davon.

4. System nach einem der Ansprüche 1 bis 3, **dadurch gekennzeichnet, dass** die reaktiven Gruppen ausgewählt sind aus mindestens einer endständigen oder innerhalb des Polymergerüsts statistisch verteilten Alkoxysilyl-Gruppe, insbesondere mit jeweils 1 bis 8 Kohlenstoffatomen im Alkoxyteil, vorzugsweise Di- oder Trialkoxysilylgruppen, besonders bevorzugt Di- oder Tri-methoxy- oder -ethoxysilyl.

5. System nach einem der Ansprüche 1 bis 4, **dadurch gekennzeichnet, dass** das mindestens eine mit reaktiven Gruppen modifizierte Polymer b) bifunktionell ist.

6. System nach Anspruch 5, **dadurch gekennzeichnet, dass** eine ggfs. endständige Alkoxysilyl, vorzugsweise Trialkoxysilyl, insbesondere Trimethoxysilyl, und eine weitere ggfs. endständige Gruppe ausgewählt aus Carboxy, Amino, Epoxy, Vinyl, Methacryl, Methacryloxy, Carbamato, Mercapto, Glycidoxy, Hydroxy und Isocyanato vorhanden sind.

7. System nach einem der Ansprüche 1 bis 6, **dadurch gekennzeichnet, dass** das mindestens eine olefinische Polymer a) ausgewählt ist aus Homo- oder Copolymeren, aufgebaut aus den Monomeren Ethylen, Propylen, n-Buten und deren höheren Homologen und Isomeren, aus funktionellen Vinylverbindungen und aus ungesättigten Säurederivaten,
wobei
die funktionellen Vinylverbindungen bevorzugt ausgewählt sind aus Vinylacetat, Vinylchlorid, Styrol, α-Methylstyrol, und
die ungesättigten Säurederivate bevorzugt ausgewählt sind aus Acrylsäure, Methacrylsäure, Acrylate, Methacrylate, Acrylnitril.

8. System nach einem der Ansprüche 1 bis 7, **dadurch gekennzeichnet, dass** das mindestens eine olefinische Polymer a) ausgewählt ist aus der Gruppe enthaltend Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO).

9. System nach einem der Ansprüche 1 bis 8, **dadurch gekennzeichnet, dass** das Polymergerüst des mindestens einen modifizierten Polymers b) ausgewählt ist aus Homo- oder Copolymeren, aufgebaut aus den Monomeren Ethylen, Propylen, n-Buten und deren höheren Homologen und Isomeren, aus funktionellen Vinylverbindungen, und aus ungesättigten Säurederivaten,
wobei
die funktionellen Vinylverbindungen bevorzugt ausgewählt sind aus Vinylacetat, Vinylchlorid, Styrol, α-Methylstyrol, und
die ungesättigten Säurederivate bevorzugt ausgewählt sind aus Acrylsäure, Methacrylsäure, Acrylate, Methacrylate, Acrylnitril.

10. System nach einem der Ansprüche 1 bis 9, **dadurch gekennzeichnet, dass** das Polymergerüst des mindestens einen modifizierten Polymers b) ausgewählt ist aus der Gruppe enthaltend Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO), Polyester, Polyether und Polyether-Polyester.

11. System nach einem der Ansprüche 1 bis 10, **dadurch gekennzeichnet, dass** der mindestens eine Füllstoff c) ausgewählt ist aus der Gruppe enthaltend Ruße, gefällte oder pyrogene Kieselsäure, ggfs. oberflächenbehandelte gefällte oder gemahlene Kreide, Zeolithe, Bentonite, Magnesiumcarbonat, Kieselgur, Tonerde, Ton, Silikate, Schwerspat, Titandioxid, Eisenoxid, Zinkoxid, Sand, Quarz, Flint, Aluminiumpulver, Zinkpulver, Glaspulver/- fasern, Kohlenstofffasern, Graphit, Siliziumoxide und Mischungen davon, wobei die Silikate bevorzugt ausgewählt sind aus Kaolin, Talkum und Glimmer.

12. System nach einem der Ansprüche 1 bis 11, **dadurch gekennzeichnet, dass** das mindestens eine Trockenmittel d) ausgewählt ist aus wasserbindenden Füllstoffen und hydrolysierbaren Silanverbindungen,
wobei die wasserbindenden Füllstoffe bevorzugt ausgewählt sind aus Kieselgel, Calciumoxid oder Zeolithen mit definierten Porendurchmessern, insbesondere Molsieben vom Typ 3A bis 10A.

13. System nach einem der Ansprüche 1 bis 12, **dadurch gekennzeichnet, dass** der mindestens eine Stabilisator e) ausgewählt ist aus der Gruppe enthaltend sterisch gehinderte Phenole, Thioether, Mercapto-Verbindungen, Phosphorester, Benzotriazole, Benzophenone, sterisch gehinderte Amine (HALS) und Ozonschutzmittel.

14. System nach einem der Ansprüche 1 bis 13, **dadurch gekennzeichnet, dass** der Katalysator und/oder Initiator ausgewählt ist aus der Gruppe enthaltend Titanate; Wismutverbindungen; Zinnverbindungen; Zinnoxide; Organoaluminumverbindungen; Chelatverbindungen; Aminverbindungen oder ihre Salze mit Carbonsäuren; organische Sulfonsäuren; Manganverbindungen; sowie Mischungen davon.

15. System nach einem der Ansprüche 1 bis 14, **dadurch gekennzeichnet, dass**, wenn der Sekundärdichtstoff ein Dichtstoff auf Polyurethan-Basis ist, die Polymerkomponente (B1) ausgewählt ist aus der Gruppe enthaltend Diole, Polyole, Polyesterpolyole, Polyester/Polyetherpolyole, vorzugsweise vollständig oder teilweise basierend auf nachwachsenden Rohstoffe, und mit verfügbarem acidem Wasserstoff-modifizierte Polyolefine und die Härterkomponente (B2) ausgewählt ist aus der Gruppe enthaltend Isocyanate, Mono-, Di-, Tri- und Polyisocyanate, , deren Derivate, die Biuret-, Harnstoff-, Carbodiimid-, Allophonat- und / oder Isocyanuratgruppen enthalten, und Mischungen davon,
wobei
die mit verfügbarem acidem Wasserstoff-modifizierten Polyolefine bevorzugt OH-, SH- oder NH-Gruppen aufweisen, und
die Isocyanate, Mono-, Di-, Tri- und Polyisocyanate bevorzugt ausgewählt sind aus Benzylisocyanat, Toluolisocyanat, Phenylisocyanat und Alkylisocyanate, bei denen die Alkylgruppe 1 bis 12 Kohlenstoffatome enthält, aromatische, cycloaliphatische und aliphatische Isocyanate, bevorzugt m-Phenylendiisocyanat, Toluol-2-4-diisocyanat, Toluol-2-6-diisocyanat, Isophorondiisocyanat, 1,3- und / oder 1,4-Bis (isocyanatomethyl) cyclohexan, einschließlich cis- oder trans- Isomere, Hexamethylen-1,6-diisocyanat, Tetramethylen-1,4-diisocyanat, Cyclohexan-1,4-diisocyanat, Hexahydrotoluoldiisocyanat, Methylenbis(cyclohexanisocyanat) (H12MDI), Naphthylen-1,5-diisocyanat, Methoxyphenyl -2,4-Diisocyanat, Diphenylmethan-4,4'-diisocyanat, 4,4'-Biphenylendiisocyanat, 3,3'-Dimethoxy-4,4'-Biphenyldiisocyanat, 3,3'-Dimethyl-4-4'-Biphenyldiisocyanat, 3,3'-Dimethyldiphenylmethan-4,4'-diisocyanat, 4,4', 4"-Triphenylmethantriisocyanat, Polymethylenpolyphenylisocyanat (PMDI), Toluol-2,4,6-Triisocyanat und 4, 4'-Dimethyldiphenylmethan-2,2', 5,5'-tetraisocyanat.

16. System nach einem der Ansprüche 1 bis 15, **dadurch gekennzeichnet, dass**, wenn der Sekundärdichtstoff ein Dichtstoff auf Polysulfid-Basis ist, die Polymerkomponente (B1) ausgewählt ist aus der Gruppe enthaltend Alkalipolysulfide, Polysulfidpolymere mit einem Molekulargewichtsbereich von etwa 500 bis 8000, bevorzugt von etwa 1000 bis etwa 4000, der allgemeinen Formel HS-(RSS)-RSH, worin R einen Kohlenwasserstoffrest, Oxakohlenwasserstoffrest oder Thiakohlenwasserstoffrest bedeutet, sowie aus thiolhaltigen Verbindungen der allgemeinen Struktur HS-(Urethan)-Polymergerüst-(Urethan)-SH worin das Polymergerüst ausgewählt ist aus der Gruppe enthaltend Diole, Polyole, Polyesterpolyole, Polyester/Polyetherpolyole, vorzugsweise vollständig oder teilweise basierend auf nachwachsenden Rohstoffen, und mit verfügbarem acidem Wasserstoff-modifizierte Polyolefine mit einer zahlenmittleren Molmasse im Bereich von etwa 100 bis 10000, worin Urethan-Funktionen durch Umsetzung mit Isocyanaten aus der Gruppe enthaltend Mono-, Di-, Tri- und Polyisocyanate und deren Derivate, die Biuret-, Harnstoff-, Carbodiimid-, Allophonat- und/oder Isocyanuratgruppen enthalten, und Mischungen davon, eingeführt sind und terminale Thiolgruppen vorhanden sind, und die Härterkomponente (B2) ausgewählt ist aus der Gruppe enthaltend ein oxidatives Härtungsmittel, Oxidationsmittel, Alkyldihalogenide, Trihalogenalkylverbindungen, basische Aminkatalysatoren,, eine Thiuramverbindung und molekularen Schwefel,
wobei
die Alkalipolysulfide bevorzugt ausgewählt sind aus Natriumpentasulfid, die mit verfügbarem acidem Wasserstoff-modifizierten Polyolefine bevorzugt OH-, SH- oder NH-Gruppen aufweisen,
das oxidative Härtungsmittel bevorzugt ausgewählt ist aus Epoxiden, das Oxidationsmittel bevorzugt ausgewählt ist aus Mangan(IV)oxid und Bleioxid,
die basischen Aminkatalysatoren bevorzugt ausgewählt sind aus einem tertiären Aminkatalysator, bevorzugt Tris-(dimethylaminomethyl)phenol, die Thiuramverbindung bevorzugt ausgewählt ist aus Dipentamethylenthiuramtetrasulfid (DPTT).

17. System nach einem der Ansprüche 1 bis 15, **dadurch gekennzeichnet, dass** die Polymerkomponente (B1) und/oder Härterkomponente (B2) zusätzlich Hilfsstoffe und Additive enthalten ausgewählt aus der Gruppe enthaltend Weichmacher, Stabilisatoren, Füllstoffe, Pigmente, Verdünner bzw. Reaktivverdünner, Trockenmittel, Haftvermittler Fungizide, Flammschutzmittel, Katalysatoren, rheologische Hilfsmittel, Farbpigmente oder Farbpasten, und Mischungen davon,
wobei
die Weichmacher bevorzugt ausgewählt sind aus Mineralölen, Weißölen, paraffinischen Kohlenwasserstoffen, Phthalaten oder Adipaten, die Stabilisatoren bevorzugt ausgewählt sind aus Antioxidantien, UV-Stabilisatoren oder Hydrolyse-Stabilisatoren,
die Füllstoffe, Pigmente bevorzugt ausgewählt sind aus Ruß, gefällter oder pyrogener Kieselsäure, ggfs. oberflächenbehandelter gefällter oder gemahlener Kreide, Zeolithen, Bentoniten, Magnesiumcarbonat, Kieselgur, Tonerde, Ton, Kaolin, Talkum, Schwerspat, Titandioxid, Eisenoxid, Zinkoxid, Sand, Quarz, Flint, Glimmer, Aluminiumpulver, Zinkpulver, Glaspulver/- fasern, Kohlenstofffasern, Graphit, Silikaten, Siliziumoxiden,
die Trockenmittel bevorzugt ausgewählt sind aus wasserbindenden Füllstoffen, insbesondere Kieselgel, Calciumoxid oder Zeolithen mit definierten Porendurchmessern, insbesondere Molsieben 3A-10A, hydrolysierbaren Silanverbindungen,
die Haftvermittler bevorzugt ausgewählt sind aus organofunktionellen Silanen, bevorzugt hydroxyfunktionellen, (meth)acryloxyfunktionellen, mercaptofunktionellen, aminofunktionellen oder epoxyfunktionellen Silanen, die Katalysatoren bevorzugt ausgewählt sind aus Manganverbindungen, bevorzugt Mangan(IV)oxid.

18. System nach einem der Ansprüche 1 bis 17, **dadurch gekennzeichnet, dass** die Komponente (A) in gelagertem Zustand frei von Katalysator ist.

19. System nach einem der Ansprüche 1 bis 17, **dadurch gekennzeichnet, dass** die Komponente (A) in gelagertem Zustand 0,001 bis 1 Gew.-%, vorzugsweise 0,01 bis 0,1 Gew.-% Katalysator enthält, ausgewählt aus der Gruppe enthaltend Titanate, Wismutverbindungen, Zinnverbindungen, Organoaluminumverbindungen, Chelatverbindungen, Aminverbindungen oder ihre Salze mit Carbonsäuren, Silanhaftvermittler mit Aminogruppen sowie Mischungen davon,
wobei
die Titanate bevorzugt ausgewählt sind aus Tetrabutyltitanat oder Titantetraacetylacetonat,
die Wismutverbindungen bevorzugt ausgewählt sind aus Bismut-tris-2-ethylhexanoat,
die Zinnverbindungen bevorzugt ausgewählt sind aus Zinncarboxylaten, bevorzugt Dibutylzinndilaurat (DBTL), Dibutylzinndiacetat oder Dibutylzinndiethylhexanoat, Zinnoxiden, bevorzugt Dibutylzinnoxid und Dioctylzinnoxid, Zinnoctylat, Dibutylzinndimaleat, Dibutylzinndiacetylacetonat und Reaktionsprodukten von Dibutylzinnoxid und Estern der Phthalsäure, die Organoaluminumverbindungen bevorzugt ausgewählt sind aus Alum inumtrisacetylacetonat,
die Chelatverbindungen bevorzugt ausgewählt sind aus Zirconiumtetraacetylacetonat, Titan-tetra-acetylacetonat,
die Aminverbindungen oder ihre Salze mit Carbonsäuren bevorzugt ausgewählt sind aus Octylamin, Cyclohexylamin, Benzylamin, Butylamin, Di-butylamin, Monoethanolamin, Triethanolamin, Diethylentriamin, Triethylentetramin, Triethylendiamin, Guanidin, Morpholin, N-methylmorpholin und 1 ,8-Diazabicyclo-(5,4,0)-undecen-7 (DBU).

20. Verwendung des Systems gemäß einem der Ansprüche 1 bis 19 zur Herstellung von Isolierglas für Fenster, Wintergärten, structural glazing und Dachverglasungen; für Verglasungen in Land-, Wasser- und Luftfahrzeugen sowie zur Herstellung von Solarmodulen.

21. Randverbund zur Herstellung von Zwei- oder Mehrscheiben-Isolierglas oder Solarmodulen, wobei ein Primärdichtstoff und ein Sekundärdichtstoff vorgesehen sind, **dadurch gekennzeichnet, dass** der Primärdichtstoff und der Sekundärdichtstoff in Form eines Dichtmassenverbunds erhältlich aus dem System gemäß einem der Ansprüche 1 bis 19 vorliegen.

22. Isolierglaseinheit umfassend mindestens zwei Glasscheiben und einem Randverbund, **dadurch gekennzeichnet, dass** der Randverbund ein Randverbund nach Anspruch 21 ist.

## Claims

1. A system for producing a sealant composite of a primary sealing material and a curable secondary sealing material, comprising at least three separately stored components (A, B1, B2), wherein the component (A) is the primary sealing material, comprising:
a) about 30-80% by weight of at least one olefinic polymer;
b) about 2-35% by weight of at least one polymer modified with reactive groups;
c) about 5-65% by weight of at least one filler;
d) about 5-25% by weight of at least one drying agent;
e) about 0-3% by weight of at least one stabiliser;
and the secondary sealing material is a sealing material based on polyurethane or polysulfide, obtainable from a polymer component (B1) and a hardener component (B2),
wherein the secondary sealing material contains a catalyst and/or an initiator, by means of which the reactive groups in the primary sealing material can be activated upon contact with the secondary sealing material.

2. The system according to claim 1, wherein the reactive groups are suitable for reacting with OH, SH or NCO functionalities.

3. The system according to claim 1 or 2, wherein the reactive groups are selected from at least one terminal group or a group statistically distributed within the polymer structure, selected from the group comprising alkoxy silyl, carboxyl, optionally substituted amino, epoxy, vinyl, methacryl, methacryloxyl, carbamate, mercapto, glycidoxy, optionally substituted hydroxyl, isocyanate and combinations thereof.

4. The system according to any one of claims 1 to 3, wherein the reactive groups are selected from at least one terminal alkoxyl silyl group or an alkoxyl silyl group statistically distributed within the polymer structure, in particular in each case with 1 to 8 carbon atoms in the alkoxyl moiety, preferably di- or tri-alkoxysilyl groups, particularly preferably di- or tri-methoxy or -ethoxysilyl.

5. The system according to any one of claims 1 to 4, wherein the at least one polymer modified with reactive groups b) is bifunctional.

6. The system according to claim 5, wherein an optionally terminal alkoxysilyl, preferably trialkoxysilyl, in particular trimethoxysilyl, and a further optionally terminal group selected from carboxy, amino, epoxy, vinyl, methacryl, methacryloxyl, carbamato, mercapto, glycidoxy, hydroxy and isocyanato are present.

7. The system according to any one of claims 1 to 6, wherein the at least one olefinic polymer a) is selected from homo- or co-polymers, composed of the monomers ethylene, propylene, n-butene and the higher homologues and isomers thereof, from functional vinyl compounds and from unsaturated acid derivatives,
wherein
the functional vinyl compounds are preferably selected from vinyl acetate, vinyl chloride, styrene, α-methylstyrene, and
the unsaturated acid derivatives are preferably selected from acrylic acid, methacrylic acid, acrylates, methacrylates, acrylonitrile.

8. The system according to any one of claims 1 to 7, wherein the at least one olefinic polymer a) is selected from the group comprising polyisobutylene, polybutylene, butyl rubber (polyisobutylene isoprene), styrene block copolymers, in particular SBS, SIS, SEBS, SEPS, SIBS, SPIBS, also in modified form, and amorphous co- and/or terpolymers of α-olefins (APAO).

9. The system according to any one of claims 1 to 8, wherein the polymer structure of the at least one modified polymer b) is selected from homo- or co-polymers, composed of the monomers ethylene, propylene, n-butene and the higher homologues and isomers thereof, from functional vinyl compounds and from unsaturated acid derivatives,
wherein
the functional vinyl compounds are preferably selected from vinyl acetate, vinyl chloride, styrene, α-methylstyrene, and
the unsaturated acid derivatives are preferably selected from acrylic acid, methacrylic acid, acrylates, methacrylates, acrylonitrile.

10. The system according to any one of claims 1 to 9, wherein the polymer structure of the at least one modified polymer b) is selected from the group comprising polyisobutylene, polybutylene, butyl rubber (polyisobutylene isoprene), styrene block copolymers, in particular SBS, SIS, SEBS, SEPS, SIBS, SPIBS, also in modified form, and amorphous co- and/or terpolymers of α-olefins (APAO), polyester, polyether and polyether-polyester.

11. The system according to any one of claims 1 to 10, wherein the at least one filler c) is selected from the group comprising carbon blacks, precipitated or pyrogenic silica, optionally surface-treated precipitated or ground chalk, zeolites, bentonites, magnesium carbonate, diatomite, alumina, clay, silicates, barite, titanium dioxide, iron oxide, zinc oxide, sand, quartz, flint, aluminium powder, zinc powder, glass powder/fibres, carbon fibres, graphite, silicon oxides and mixtures thereof,
wherein the silicates are preferably selected from kaolin, talc and mica.

12. The system according to any one of claims 1 to 11, wherein the at least one drying agent d) is selected from water-binding fillers and hydrolysable silane compounds,
wherein the water-binding fillers are preferably selected from silica gel, calcium oxide or zeolites with defined pore diameters, in particular type 3A to 10A molecular sieves.

13. The system according to any one of claims 1 to 12, wherein the at least one stabiliser e) is selected from the group comprising sterically hindered phenols, thioethers, mercapto compounds, phosphorous esters, benzotriazoles, benzophenones, sterically hindered amines (HALS) and ozone protection means.

14. The system according to any one of claims 1 to 13, wherein the catalyst and/or initiator is selected from the group comprising titanates; bismuth compounds; tin compounds; tin oxides; organoaluminium compounds; chelate compounds; amine compounds or the salts thereof with carboxylic acids; organic sulphonic acids; manganese compounds; and mixtures thereof.

15. The system according to any one of claims 1 to 14, wherein, when the secondary sealing material is a sealant based on polyurethane, the polymer component (B1) is selected from the group comprising diols, polyols, polyester polyols, polyester/polyether polyols, preferably based completely or partially on renewable raw materials, and polyolefins modified with available acidic hydrogen, and the hardener component (B2) is selected from the group comprising isocyanates, mono-, di-, tri- and polyisocyanates, derivatives thereof comprising biuret, urea, carbodiimide, allophonate and/or isocyanurate groups, and mixtures thereof,
wherein
the polyolefins modified with available acidic hydrogen preferably have OH; SH or NH groups, and
the isocyanates, mono-, di-, tri- and polyisocyanates are preferably selected from benzyl isocyanate, toluene isocyanate, phenyl isocyanate and alkyl isocyanates, in which the alkyl group contains 1 to 12 carbon atoms, aromatic, cycloaliphatic and aliphatic isocyanates such as m-phenylene diisocyanate, toluene 2-4 diisocyanate, toluene 2-6- diisocyanate, isophorone diisocyanate, 1,3- and/or 1,4-bis-(isocyanatomethyl) cyclohexane (including cis- or trans-isomers), hexamethylene-1,6-diisocyanate, tetramethylene-1,4-diisocyanate, cyclohexane-1,4-diisocyanate, hexahydrotoluene diisocyanate, methylenebis(cyclohexane isocyanate) (H12MDI), naphthylene-1,5-diisocyanate, methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenylmethane-4,4'-diisocyanate, 4,4', 4"-triphenylmethane triisocyanate, polymethylene polyphenyl isocyanate (PMDI), toluene-2,4,6-triisocyanate and 4,4'-dimethyldiphenylmethane-2,2', 5,5'-tetraisocyanate.

16. The system according to any one of claims 1 to 15, wherein, when the secondary sealing material is a sealing material based on polysulfide, the polymer component (B1) is selected from the group comprising alkali polysulfides, polysulfide polymers with a molecular weight range of from about 500 to 8000, preferably from about 1000 to about 4000, of the general formula HS-(RSS)-RSH, in which R denotes a hydrocarbon residue, oxahydrocarbon residue or thiahydrocarbon residue, and from thiol-containing compounds of the general structure HS-(urethane)-polymer structure-urethane-SH, wherein the polymer structure is selected from the group comprising diols, polyols, polyesterpolyols, polyester/polyether polyols, preferably completely or partially based on renewable raw materials, and polyolefins modified with available acidic hydrogen with a number average molecular weight ranging from about 100 to 10000, wherein urethane functions are introduced by reaction with isocyanates from the group comprising mono-, di-, tri- and polyisocyanates and the derivatives thereof, which contain biuret, urea, carbodiimide, allophonate and/or isocyanurate groups, and mixtures thereof, and terminal thiol groups are present, and the hardener component (B2) is selected from the group comprising an oxidative hardener, oxidising agent, alkyl dihalides, trihaloalkyl compounds, basic amine catalysts, a thiuram compound, and molecular sulphur,
wherein
alkali polysulfides are preferably selected from sodium pentasulfide,
the polyolefins modified with available acidic hydrogen preferably have OH, SH or NH groups,
the oxidative hardener is preferably selected from epoxides,
the oxidising agent is preferably selected from manganese (IV) oxide and lead oxide,
the basic amine catalysts are preferably selected from a tertiary amine catalyst, preferably tris-(dimethylaminomethyl)phenol,
the thiuram compound is preferably selected from dipentamethylene thiuram tetrasulfide (DPTT).

17. The system according to any one of claims 1 to 15, wherein the polymer component (B1) and/or hardener component (B2) additionally contain expedients and additives, selected from the group comprising plasticisers, stabilisers, fillers, pigments, diluents or reactive diluents, drying agents, adhesion-promoting agents, fungicides, flame retardants, catalysts, rheological auxiliaries, colour pigments or colour pastes, and mixtures thereof,
wherein
the plasticisers are preferably selected from mineral oils, white oils, paraffinic hydrocarbons, phthalates or adipates,
the stabilisers are preferably selected from antioxidants, UV stabilisers or hydrolysis stabilisers,
the fillers, pigments are preferably selected from carbon black, precipitated or pyrogenic silica, optionally surface-treated precipitated or ground chalk, zeolites, bentonites, magnesium carbonate, diatomite, alumina, clay, kaolin, talc, barite, titanium dioxide, iron oxide, zinc oxide, sand, quartz, flint, mica,
aluminium powder, zinc powder, glass powder/fibres, carbon fibres, graphite, silicates, silicon oxides,
the drying agents are preferably selected from water-binding fillers, in particular silica gel, calcium oxide or zeolites with defined pore diameters, in particular molecular sieves 3A-10A, hydrolysable silane compounds,
the adhesion-promoting agents are preferably selected from organofunctional silanes, preferably hydroxy-functional, (meth)acryloxy-functional, mercapto-functional, amino-functional or epoxy-functional silanes,
the catalysts are preferably selected from manganese compounds, preferably manganese (IV) oxide.

18. The system according to any one of claims 1 to 17, wherein the component (A) in the stored state is free of catalyst.

19. The system according to any one of claims 1 to 17, wherein the component (A) in the stored state contains 0.001 to 1% by weight, preferably 0.01 to 0.1% by weight, of catalyst, selected from the group comprising titanates, bismuth compounds, tin compounds, organoaluminium compounds, chelate compounds, amine compounds or their salts with carboxylic acids, silane adhesion-promoting agents with amino groups and mixtures thereof,
wherein
the titanates are preferably selected from tetrabutyl titanate or titanium tetraacetylacetonate,
the bismuth compounds are preferably selected from bismuth-tris-2-ethylhexanoate,
the tin compounds are preferably selected from tin carboxylates, preferably dibutyltin dilaurate (DBTL), dibutyltin diacetate or dibutyltin diethyl hexanoate; tin oxides, preferably dibutyltin oxide and dioctyl tin oxide, tin octylate, dibutyltin dimaleate, dibutyltin diacetyl acetonate and reaction products of dibutyltin oxide and esters of phthalic acid,
the organoaluminium compounds are preferably selected from aluminium trisacetylacetonate,
the chelate compounds are preferably selected from zirconium tetraacetylacetonate, titanium tetraacetylacetonate,
the amine compounds or their salts with carboxylic acids are preferably selected from octylamine, cyclohexylamine, benzylamine, butylamine, dibutylamine, monoethanolamine, triethanolamine, diethylenetriamine, triethylenetetramine, triethylenediamine, guanidine, morpholine, N-methylmorpholine and 1,8-diazabicyclo-(5,4,0)-undecene-7 (DBU).

20. Use of the system according to any one of claims 1 to 19 for the production of insulating glass for windows, conservatories, structural glazing and roof glazing, for glazing in land, water and air vehicles, and for the production of solar modules.

21. An edge seal for the production of double-pane or multi-pane insulating glass or solar modules, wherein a primary sealing material and a secondary sealing material are provided, wherein the primary sealing material and the secondary sealing material are present in the form of a sealant composite obtainable from the system according to any one of claims 1 to 19.

22. An insulating glass unit comprising at least two glass panes and an edge seal, wherein the edge seal is an edge seal according to claim 21.

## Revendications

1. Système pour la fabrication d'un composé d'étanchéité à partir d'un matériau d'étanchéité primaire et d'un matériau d'étanchéité secondaire durcissable, contenant au moins trois composants (A, B1, B2) stockés séparément, le composant (A) étant le matériau d'étanchéité primaire, contenant:
a) environ 30 à 80 % en poids d'au moins un polymère oléfinique;
b) environ 2 à 35 % en poids d'au moins un polymère modifié par des groupes réactifs;
c) environ 5 à 65 % en poids d'au moins une charge;
d) environ 5 à 25 % en poids d'au moins un agent dessicant;
e) environ 0 à 3 % en poids d'au moins un stabilisateur;
et le matériau d'étanchéité secondaire étant un matériau d'étanchéité à base de polyuréthane ou de polysulfure, pouvant être obtenu à partir d'un composant polymère (B1) et d'un composant durcisseur (B2),
le matériau d'étanchéité secondaire contenant un catalyseur et/ou un initiateur par lequel les groupes réactifs dans le matériau d'étanchéité primaire peuvent être activés lors du contact avec le matériau d'étanchéité secondaire.

2. Système selon la revendication 1, **caractérisé en ce que** les groupes réactifs sont adaptés pour réagir avec des fonctions OH, SH ou NCO.

3. Système selon la revendication 1 ou 2, **caractérisé en ce que** les groupes réactifs sont choisis parmi au moins un groupe terminal ou réparti de manière aléatoire dans le squelette de polymère, choisi dans le groupe comprenant les groupes alcoxysilyle, carboxy, amino éventuellement substitué, époxy, vinyle, méthacryle, méthacryloxy, carbamato, mercapto, glycidoxy, hydroxy éventuellement substitué, isocyanato et leurs combinaisons.

4. Système selon l'une quelconque des revendications 1 à 3, **caractérisé en ce que** les groupes réactifs sont choisis parmi au moins un groupe alcoxysilyle terminal ou répartis statistiquement dans le squelette de polymère, en particulier avec respectivement 1 à 8 atomes de carbone dans la partie alcoxy, de préférence des groupes di- ou trialcoxysilyle, de manière particulièrement préférée di- ou tri-méthoxy- ou -éthoxysilyle.

5. Système selon l'une quelconque des revendications 1 à 4, **caractérisé en ce que** ledit au moins un polymère b) modifié par des groupes réactifs est bifonctionnel.

6. Système selon la revendication 5, **caractérisé en ce qu'**un alcoxysilyle éventuellement terminal, de préférence un trialcoxysilyle, en particulier un triméthoxysilyle, et un autre groupe éventuellement terminal choisi parmi les groupes carboxy, amino, époxy, vinyle, méthacryle, méthacryloxy, carbamato, mercapto, glycidoxy, hydroxy et isocyanato sont présents.

7. Système selon l'une quelconque des revendications 1 à 6, **caractérisé en ce que** le au moins un polymère oléfinique a) est choisi parmi les homo- ou copolymères formés à partir des monomères éthylène, propylène, n-butène et de leurs homologues et isomères supérieurs, à partir des composés vinyliques fonctionnels et à partir des dérivés d'acides insaturés,
où
les composés vinyliques fonctionnels sont de préférence choisis parmi l'acétate de vinyle, le chlorure de vinyle, le styrène, l'α-méthylstyrène, et les dérivés acides insaturés sont de préférence choisis parmi l'acide acrylique, l'acide méthacrylique, les acrylates, les méthacrylates, l'acrylonitrile.

8. Système selon l'une quelconque des revendications 1 à 7, **caractérisé en ce que** le au moins un polymère oléfinique a) est choisi dans le groupe contenant le polyisobutylène, le polybutène, le caoutchouc butyle (polyisobutylène-isoprène), les copolymères séquencés de styrène, en particulier SBS, SIS, SEBS, SEPS, SIBS, SPIBS, également sous forme modifiée et les co- et/ou terpolymères amorphes d'α-oléfines (APAO).

9. Système selon l'une quelconque des revendications 1 à 8, **caractérisé en ce que** le squelette de polymère du au moins un polymère modifié b) est choisi parmi les homo- ou copolymères formés à partir des monomères éthylène, propylène, n-butène et de leurs homologues et isomères supérieurs, à partir des composés vinyliques fonctionnels, et à partir des dérivés d'acides insaturés,
où
les composés vinyliques fonctionnels sont de préférence choisis parmi l'acétate de vinyle, le chlorure de vinyle, le styrène, l'α-méthylstyrène, et les dérivés acides insaturés sont de préférence choisis parmi l'acide acrylique, l'acide méthacrylique, les acrylates, les méthacrylates, l'acrylonitrile.

10. Système selon l'une quelconque des revendications 1 à 9, **caractérisé en ce que** le squelette de polymère du au moins un polymère modifié b) est choisi dans le groupe contenant le polyisobutylène, le polybutène, le caoutchouc butyle (polyisobutylène-isoprène), les copolymères séquencés de styrène, en particulier SBS, SIS, SEBS, SEPS, SIBS, SPIBS, y compris sous forme modifiée et les co- et/ou terpolymères amorphes d'α-oléfines (APAO), de polyesters, de polyéthers et de polyéther-polyesters.

11. Système selon l'une quelconque des revendications 1 à 10, **caractérisé en ce que** l'au moins une charge c) est choisie dans le groupe contenant : noirs de carbone, silice précipitée ou pyrogénée, craie précipitée ou broyée éventuellement traitée en surface, zéolithes, bentonites, carbonate de magnésium, terre de diatomée, alumine, argile, silicates, barytine, dioxyde de titane, oxyde de fer, oxyde de zinc, sable, quartz, silex, poudre d'aluminium, poudre de zinc, poudre/fibres de verre, fibres de carbone, graphite, oxydes de silicium et leurs mélanges, les silicates étant de préférence choisis parmi le kaolin, le talc et le mica.

12. Système selon l'une quelconque des revendications 1 à 11, **caractérisé en ce que** ledit au moins un agent dessicant d) est choisi parmi des charges fixant l'eau et des composés silanes hydrolysables,
les charges fixant l'eau étant de préférence choisies parmi le gel de silice, l'oxyde de calcium ou les zéolithes avec des diamètres de pores définis, en particulier les tamis moléculaires de type 3A à 10A.

13. Système selon l'une quelconque des revendications 1 à 12, **caractérisé en ce que** le au moins un stabilisant e) est choisi dans le groupe contenant des phénols à encombrement stérique, des thioéthers, des composés mercapto, des esters phosphoriques, des benzotriazoles, des benzophénones, des amines à encombrement stérique (HALS) et des agents de protection contre l'ozone.

14. Système selon l'une quelconque des revendications 1 à 13, **caractérisé en ce que** le catalyseur et/ou l'initiateur est choisi dans le groupe comprenant les titanates ; les composés du bismuth ; les composés de l'étain ; les oxydes d'étain ; les composés organoaluminiques ; les composés de chélation ; les composés aminiques ou leurs sels d'acides carboxyliques ; les acides sulfoniques organiques ; les composés du manganèse ; ainsi que leurs mélanges.

15. Système selon l'une quelconque des revendications 1 à 14, **caractérisé en ce que**, si le matériau d'étanchéité secondaire est un matériau d'étanchéité à base de polyuréthane, le composant polymère (B1) est choisi dans le groupe contenant des diols, des polyols, des polyesterpolyols, des polyesters/polyétherpolyols, de préférence entièrement ou partiellement à base de matières premières renouvelables, et des polyoléfines modifiées par de l'hydrogène acide disponible et le composant durcisseur (B2) est choisi dans le groupe contenant des isocyanates, des mono-, di-, tri- et polyisocyanates, leurs dérivés, qui contiennent des groupes biuret, urée, carbodiimide, allophonate et/ou isocyanurate, et leurs mélanges,
où
les polyoléfines modifiées par de l'hydrogène acide disponible présentent de préférence des groupes OH, SH ou NH, et
les isocyanates, mono-, di-, tri- et polyisocyanates sont de préférence choisis parmi l'isocyanate de benzyle, l'isocyanate de toluène, l'isocyanate de phényle et les isocyanates d'alkyle, dans lesquels le groupe alkyle contient de 1 à 12 atomes de carbone, isocyanates aromatiques, cycloaliphatiques et aliphatiques, de préférence : diisocyanate de m-phénylène, 2-4-diisocyanate de toluène, 2-6-diisocyanate de toluène, diisocyanate d'isophorone , 1,3-et/ou 1,4-bis (isocyanatométhyl) cyclohexane, y compris les isomères cis ou trans, 1,6-diisocyanate d'hexaméthylène, 1,4-diisocyanate de tétraméthylène, 1,4-diisocyanate de cyclohexane, diisocyanate d'hexahydrotoluène, méthylènebis(cyclohexane-isocyanate) (H12MDI), 1,5-diisocyanate de naphtylène, 2,4-diisocyanate de méthoxyphényle, 4,4'-diisocyanate de diphénylméthane, 4,4'-biphénylène diisocyanate, 3,3'-diméthoxy-4,4'-biphényl diisocyanate, 3,3'-diméthyl-4-4'-biphényl diisocyanate, 3,3'-diméthyldiphénylméthane-4,4'-diisocyanate, 4,4',4"-triphénylméthane triisocyanate, polyphénylisocyanate de polyméthylène (PMDI), 2,4,6-triisocyanate de toluène et 2,2',5,5'-tétraisocyanate de 4,4'-diméthyldiphénylméthane.

16. Système selon l'une quelconque des revendications 1 à 15, **caractérisé en ce que**,
lorsque le matériau d'étanchéité secondaire est un matériau d'étanchéité à base de polysulfure, le composant polymère (B1) est choisi dans le groupe constitué des polysulfures alcalins, des polymères de polysulfure de poids moléculaire dans la plage d'environ 500 à 8000, de préférence d'environ 1000 à environ 4000, de formule générale HS-(RSS)-RSH, dans laquelle R représente un radical hydrocarboné, un radical oxahydrocarboné ou un radical thiahydrocarboné, ainsi que de composés contenant des thiols de structure générale HS-(uréthane)-squelette de polymère-(uréthane)-SH dans laquelle le squelette de polymère est choisi dans le groupe contenant des diols, des polyols, des polyesterpolyols, des polyester/polyétherpolyols, de préférence entièrement ou partiellement à base de matières premières renouvelables, et des polyoléfines modifiées par de l'hydrogène disponible de masse molaire moyenne en nombre dans la plage d'environ 100 à 10 000, dans lesquelles des fonctions uréthane sont obtenues par réaction avec des isocyanates du groupe contenant des mono-, di-, tri- et polyisocyanates et leurs dérivés, qui contiennent des groupes biuret, urée, carbodiimide, allophonate et/ou isocyanurate, et leurs mélanges, avec la présence de groupes thiol terminaux, et le composant durcisseur (B2) est choisi dans le groupe contenant un agent durcisseur oxydant, des agents oxydants, des dihalogénures d'alkyle, des composés trihalogénoalkyle, des catalyseurs d'amines basiques, un composé thiurame et du soufre moléculaire,
où
les polysulfures alcalins sont de préférence choisis parmi le pentasulfure de sodium, qui présentent des polyoléfines modifiées par de l'hydrogène acide disponible, de préférence des groupes OH, SH ou NH,
l'agent durcisseur oxydant est de préférence choisi parmi les époxydes, l'agent oxydant est de préférence choisi parmi l'oxyde de manganèse (IV) et l'oxyde de plomb,
les catalyseurs d'amines basiques sont de préférence choisis parmi un catalyseur d'amine tertiaire, de préférence le tris-(diméthylaminométhyl)phénol,
le composé thiurame est de préférence choisi parmi le tétrasulfure de dipentaméthylène-thiurame (DPTT).

17. Système selon l'une quelconque des revendications 1 à 15, **caractérisé en ce que** le composant polymère (B1) et/ou le composant durcisseur (B2) contiennent en outre des adjuvants et des additifs choisis dans le groupe contenant des plastifiants, des stabilisants, des charges, des pigments, des diluants ou des diluants réactifs, des siccatifs, des promoteurs d'adhérence, des fongicides, des agents ignifuges, des catalyseurs, des adjuvants rhéologiques, des pigments colorés ou des pâtes colorées, et des mélanges de ceux-ci,
où
les plastifiants sont de préférence choisis parmi les huiles minérales, les huiles blanches, les hydrocarbures paraffiniques, les phtalates ou les adipates, les stabilisants sont de préférence choisis parmi les antioxydants, les stabilisants UV ou les stabilisants d'hydrolyse,
les charges, les pigments sont de préférence choisis parmi : noir de carbone, silice précipitée ou pyrogénée, craie précipitée ou broyée éventuellement traitée en surface, zéolithes, bentonites, carbonate de magnésium, terre de diatomée, argile, kaolin, talc, barytine, dioxyde de titane, oxyde de fer, oxyde de zinc, sable, quartz, silex, mica, poudre d'aluminium, poudre de zinc, poudre/fibres de verre, fibres de carbone, graphite, silicates, oxydes de silicium,
les agents de séchage sont de préférence choisis parmi les charges fixant l'eau, en particulier le gel de silice, l'oxyde de calcium ou les zéolithes avec des diamètres de pores définis, en particulier les tamis moléculaires 3A-10A, les composés de silane hydrolysables,
les agents d'adhérence sont de préférence choisis parmi les silanes organofonctionnels, de préférence les silanes à fonction hydroxy, à fonction (méth)acryloxy, à fonction mercapto, à fonction amino ou à fonction époxy, les catalyseurs sont de préférence choisis parmi les composés du manganèse, de préférence l'oxyde de manganèse (IV).

18. Système selon l'une quelconque des revendications 1 à 17, **caractérisé en ce que** le composant (A) est exempt de catalyseur à l'état stocké.

19. Système selon l'une quelconque des revendications 1 à 17,
**caractérisé en ce que** le composant (A) contient, à l'état stocké, 0,001 à 1 % en poids, de préférence 0,01 à 0,1 % en poids de catalyseur, choisi dans le groupe contenant des titanates, des composés du bismuth, des composés de l'étain, des composés organoaluminiques, des composés de chélation, des composés aminés ou leurs sels avec des acides carboxyliques, des agents de couplage de silane avec des groupes amino ainsi que leurs mélanges,
où
les titanates sont de préférence choisis parmi le titanate de tétrabutyle ou l'acétonate de titane-tétraacétyle,
les composés de bismuth sont de préférence choisis parmi le tris-2-éthylhexanoate de bismuth,
les composés d'étain sont de préférence choisis parmi les carboxylates d'étain, de préférence le dilaurate de dibutylétain (DBTL), le diacétate de dibutylétain ou le diéthylhexanoate de dibutylétain, les oxydes d'étain, de préférence l'oxyde de dibutylétain et l'oxyde de dioctylétain, l'octylate d'étain, le dimaléate de dibutylétain, le diacétylacétonate de dibutylétain et les produits de réaction de l'oxyde de dibutylétain et des esters de l'acide phtalique, les composés organoaluminiques sont de préférence choisis parmi le trisacétylacétonate d'aluminium, les composés de chélation sont de préférence choisis parmi le tétraacétylacétonate de zirconium, le tétraacétylacétonate de titane,
les composés aminés ou leurs sels avec des acides carboxyliques sont de préférence choisis parmi l'octylamine, la cyclohexylamine, la benzylamine, la butylamine, la dibutylamine, la monoéthanolamine, la triéthanolamine, la diéthylène-triamine, la triéthylène tétramine, la triéthylène diamine, la guanidine, la morpholine, la N-méthylmorpholine et le 1,8-diazabicyclo-(5,4,0)-undécène-7 (DBU).

20. Utilisation du système selon l'une quelconque des revendications 1 à 19 pour la fabrication de vitrages isolants pour fenêtres, vérandas, vitrage structurel et vitrages de toitures ; pour des vitrages de véhicules terrestres, aquatiques et aériens ainsi que pour la fabrication de modules solaires.

21. Joint de bordure pour la fabrication de vitrages isolants à deux ou plusieurs vitres ou de modules solaires, un matériau d'étanchéité primaire et un matériau d'étanchéité secondaire étant prévus, **caractérisé en ce que** le matériau d'étanchéité primaire et le matériau d'étanchéité secondaire se présentent sous la forme d'un composite d'étanchéité pouvant être obtenu à partir du système selon l'une quelconque des revendications 1 à 19.

22. Unité de vitrage isolant comprenant au moins deux feuilles de verre et un joint de bordure, **caractérisée en ce que** le joint de bordure est un joint de bordure selon la revendication 21.
